(19) Europäisches Patentamt
European Patent Office
Office européen des brevets

(11) **EP 3 398 995 B1**

(12) # EUROPEAN PATENT SPECIFICATION

(45) Date of publication and mention
of the grant of the patent:
**21.04.2021 Bulletin 2021/16**

(21) Application number: **16881660.1**

(22) Date of filing: **19.12.2016**

(51) Int Cl.:
*C08L 77/06* [(2006.01)]     *C08J 5/18* [(2006.01)]
*C08K 5/098* [(2006.01)]     *C08K 5/20* [(2006.01)]
*C08L 77/00* [(2006.01)]     *B32B 27/34* [(2006.01)]
*B32B 1/02* [(2006.01)]     *B32B 1/08* [(2006.01)]
*B32B 15/082* [(2006.01)]     *B32B 15/085* [(2006.01)]
*B32B 15/088* [(2006.01)]     *B32B 15/09* [(2006.01)]
*B32B 15/20* [(2006.01)]     *B32B 27/08* [(2006.01)]
*B32B 27/10* [(2006.01)]     *B32B 27/30* [(2006.01)]
*B32B 27/32* [(2006.01)]     *B32B 27/36* [(2006.01)]
*B32B 29/00* [(2006.01)]     *B32B 7/12* [(2006.01)]

(86) International application number:
**PCT/JP2016/087794**

(87) International publication number:
**WO 2017/115685 (06.07.2017 Gazette 2017/27)**

(54) **DRY-BLENDED MIXTURE**

TROCKENGEMISCHTE MISCHUNG

MÉLANGE COMBINÉ À SEC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2015 JP 2015257311**

(43) Date of publication of application:
**07.11.2018 Bulletin 2018/45**

(73) Proprietor: **Mitsubishi Gas Chemical Company,
Inc.
Tokyo 100-8324 (JP)**

(72) Inventors:
• **ODA, Takafumi**
**Hiratsuka-shi**
**Kanagawa 254-0016 (JP)**

• **KANEKO, Naoki**
**Hiratsuka-shi**
**Kanagawa 254-0016 (JP)**
• **KATO, Tomonori**
**Hiratsuka-shi**
**Kanagawa 254-0016 (JP)**

(74) Representative: **Vossius & Partner
Patentanwälte Rechtsanwälte mbB
Siebertstrasse 3
81675 München (DE)**

(56) References cited:
**WO-A1-2014/156701     JP-A- 2001 278 330
JP-A- 2011 058 144     US-A1- 2014 220 274**

**Description**

TECHNICAL FIELD

The present invention relates to a dry-blend mixture, and in detail, the invention relates to a dry-blend mixture of a metaxylylene group-containing polyamide.

BACKGROUND ART

Packaging materials used in the packaging of foods, beverages, and so on must exhibit a wide range of functions, including not only functions such as strength, resistance to splitting, and heat resistance that protect the contents during various types of distribution, storage such as refrigeration, and treatments such as heat sterilization, but also functions such as excellent transparency that enable the contents to be viewed. Furthermore, recently, gas barrier properties for preventing penetration of oxygen from the outside to protect packaged foods from oxidation and a barrier function against various fragrance components following changes of tastes are also required.

As the packaging materials having gas barrier properties, multilayer films in which a gas barrier resin such as polyvinylidene chloride (PVDC), an ethylene-vinyl alcohol copolymer (EVOH) and a polyamide is utilized for the gas barrier layer are used. Among polyamides, a metaxylylene group-containing polyamide obtained through polycondensation of metaxylylenediamine and an $\alpha,\omega$-aliphatic dicarboxylic acid having 6 to 12 carbon atoms has such characteristic features that as compared with other gas barrier resins, when a boiling treatment or a retort treatment is carried out, worsening of the gas barrier properties is small, and recovery of the gas barrier properties is fast. In particular, as for poly(metaxylylene adipamide) (MXD6) using adipic acid as the $\alpha,\omega$-aliphatic dicarboxylic acid having 6 to 12 carbon atoms, taking such characteristics features, its utilization is being advanced recently in the packaging field.

However, though MXD6 has such a characteristic feature that its modulus of elasticity is high, its stretchability or flexibility which is considered to be necessary for a film or sheet application is low. Therefore, when it is contemplated to apply MXD6 to the film or sheet application, there was a case where worsening of impact resistance or pinhole resistance, worsening of shrink performance, or the like takes place. Furthermore, at the time of molding MXD6 into a film or sheet, the molding range becomes very narrow, and the moldability is poor, so that a problem of influencing the productivity is occasionally caused, and in particular, such is remarkable in a stretching step.

In addition, PTL 1 discloses a polyamide filament in which MXD6 is blended with an aliphatic polyamide for the purpose of improving the flexural rigidity of MXD6.

CITATION LIST

PATENT LITERATURE

PTL 1: JP 2011-058144 A
US 2014/0220274 A1 describes a film containing a layer formed from a resin composition containing a polyamide compound (A) and a resin (B), wherein the polyamide compound (A) contains from 25 to 50% by mol of a diamine unit, which contains a particular diamine unit, in an amount of 50% by mol or more from 25 to 50% by mol of a dicarboxylic acid unit, which contains a particular dicarboxylic acid unit, in an amount of 50% by mol or more; and from 0.1 to 50% by mol of a particular constitutional unit.

SUMMARY OF INVENTION

TECHNICAL PROBLEM

A technical problem to be solved by the present invention is to provide a polyamide mixture from which a polyamide film packaging material with excellent gas barrier properties, transparency, and toughness may be produced.

SOLUTION TO PROBLEM

In order to solve the aforementioned problem, the present inventors attempted to perform molding processing of a film by melt-mixing MXD6 with nylon 6/66 for the purpose of improving the toughness of MXD6. But, a resin pressure at the time of film molding processing, or the like became instable, and a problem such as surging was caused. Thus, it was difficult to obtain a film having a stable quality. In addition, though elongation of the film was improved, a difference in the gas barrier properties was seen depending upon molding processing conditions, so that the performance of the obtained film was insufficient.

Then, the present inventors further made extensive and intensive investigations. As a result, it has been found that when a mixture obtained by dry-blending MXD6 and nylon 6/66 in a specified mass ratio is molded into a film, a film with stable gas barrier properties and excellent transparency and toughness is obtained. The present invention has been accomplished on a basis of such finding.

The present invention is concerned with the following <1> to <13>.

<1> A dry-blend mixture, containing:

(A) a metaxylylene group-containing polyamide containing a diamine unit including 80 mol% or more of a metaxylylenediamine unit based on the diamine unit and a dicarboxylic acid unit including 80 mol% or more of at least one unit selected from the group consisting of an $\alpha,\omega$-linear aliphatic dicarboxylic acid unit having 6 to 12 carbon atoms and an isophthalic acid unit based on the dicarboxylic acid unit, in which a molar ratio of the $\alpha,\omega$-linear aliphatic dicarboxylic acid unit and the isophthalic acid unit (($\alpha,\omega$-linear aliphatic dicarboxylic acid unit)/(isophthalic acid unit)) is 80/20 to 100/0; and

(B) an aliphatic polyamide containing 75 to 95 mol% of an $\varepsilon$-aminocaproic acid unit and 25 to 5 mol% of a hexamethylene adipamide unit based on the total constitutional units of the aliphatic polyamide,

wherein a mass ratio ((A)/(B)) of the metaxylylene group-containing polyamide (A) and the aliphatic polyamide (B) is in a range of from 55/45 to 65/35.

<2> The dry-blend mixture as set forth in the above <1>, wherein a melting point peak (Tm(A,M)) of the metaxylylene group-containing polyamide (A) measured by differential scanning calorimetry for a molded product of the dry-blend mixture and a melting point (Tm(A)) of the metaxylylene group-containing polyamide (A) measured by differential scanning calorimetry for the metaxylylene group-containing polyamide (A) before dry-blending satisfy the following relation (1), and a melting point peak (Tm(B,M)) of the aliphatic polyamide (B) measured by differential scanning calorimetry for a molded product of the dry-blend mixture and a melting point (Tm(B)) of the aliphatic polyamide (B) measured by differential scanning calorimetry for the aliphatic polyamide (B) before dry-blending satisfy the following relation (2):

$$\mathrm{Tm(A) - 3 \leq Tm(A,M) \leq Tm(A)} \qquad (1)$$

$$\mathrm{Tm(B) - 3 \leq Tm(B,M) \leq Tm(B)} \qquad (2).$$

<3> The dry-blend mixture as set forth in the above <2>, wherein the melting point peak (Tm(A,M)) of the metaxylylene group-containing polyamide (A) is within a range of from 225 to 237.5°C; and
the melting point peak (Tm(B,M)) of the aliphatic polyamide (B) is within a range of from 195 to 199°C.

<4> The dry-blend mixture as set forth in any one of the above <1> to <3>, wherein a difference between a relative viscosity of the metaxylylene group-containing polyamide (A) and a relative viscosity of the aliphatic polyamide (B) is within a range of from 0.6 to 1.6.

<5> The dry-blend mixture as set forth in any one of the above <1> to <4>, further containing 300 to 4,000 mass ppm of a compatibilization inhibitor based on 100 parts by mass of the total amount of the metaxylylene group-containing polyamide (A) and the aliphatic polyamide (B).

<6> The dry-blend mixture as set forth in the above <5>, wherein the compatibilization inhibitor is at least one selected from the group consisting of sodium acetate and calcium hydroxide.

<7> The dry-blend mixture as set forth in any one of the above <1> to <6>, further containing 100 to 4,000 mass ppm of ethylene bis(stearamide) or calcium stearate and 30 to 800 mass ppm of a nonionic surfactant,
wherein the ethylene bis(stearamide) or calcium stearate is spread on the dry-blend mixture through the nonionic surfactant.

<8> A method for producing a dry-blend mixture, including a step of dry-blending:

pellets of (A) a metaxylylene group-containing polyamide containing a diamine unit including 80 mol% or more of a metaxylylenediamine unit based on the diamine unit and a dicarboxylic acid unit including 80 mol% or more of at least one unit selected from the group consisting of an $\alpha,\omega$-linear aliphatic dicarboxylic acid unit having 6 to 12 carbon atoms and an isophthalic acid unit based on the dicarboxylic acid unit, in which a molar ratio of the $\alpha,\omega$-linear aliphatic dicarboxylic acid unit and the isophthalic acid unit (($\alpha,\omega$-linear aliphatic dicarboxylic acid unit)/(isophthalic acid unit)) is 80/20 to 100/0; and
pellets of (B) an aliphatic polyamide containing 75 to 95 mol% of an $\varepsilon$-aminocaproic acid unit and 25 to 5 mol% of a hexamethylene adipamide unit based on the total constitutional units of the aliphatic polyamide,
wherein a mass ratio ((A)/(B)) of the metaxylylene group-containing polyamide (A) and the aliphatic polyamide (B) is in a range of from 55/45 to 65/35.

<9> The method for producing a dry-blend mixture as set forth in the above <8>, wherein in the step of dry-blending, 300 to 4,000 mass ppm of a compatibilization inhibitor based on 100 parts by mass of the total amount of the metaxylylene group-containing polyamide (A) and the aliphatic polyamide (B) is added.

<10> The method for producing a dry-blend mixture as set forth in the above <8> or <9>, including, after the step of dry-blending, a step of adding 30 to 800 mass ppm of a nonionic surfactant based on 100 parts by mass of the total amount of the metaxylylene group-containing polyamide (A) and the aliphatic polyamide (B) and subsequently adding 100 to 4,000 mass ppm of ethylene bis(stearamide) or calcium stearate based on 100 parts by mass of the total amount of the metaxylylene group-containing polyamide (A) and the aliphatic polyamide (B).

<11> A molded product of a dry-blend mixture obtained by melt-mixing the dry-blend mixture as set forth in any one of the above <1> to <7>, wherein a microphase-separated structure is existent in the molded product.

<12> The molded product of a dry-blend mixture as set forth in the above <11>, wherein the microphase-separated structure is a cylindrical structure,

a cylindrical domain of the cylindrical structure is the aliphatic polyamide (B),
a diameter of the cylindrical domain is 100 to 200 nm,
a length in MD of the cylindrical domain is longer than a length in TD of the cylindrical domain, and
an average length in MD of the cylindrical domain is 200 nm to 3 $\mu$m.

<13> A film or sheet including a layer formed of the dry-blend mixture as set forth in any one of the above <1> to <7>.

ADVANTAGEOUS EFFECTS OF INVENTION

The dry-blend mixture of the present invention is able to provide a polyamide film with excellent gas barrier properties, transparency, and toughness.

BRIEF DESCRIPTION OF DRAWINGS

Fig. 1 is a SEM photograph in which the morphology of a gas barrier layer of a multilayer film obtained in Example 5 is observed and is a photograph for measuring a length in MD of a cylindrical domain.
Fig. 2 is a SEM photograph in which the morphology of a gas barrier layer of a multilayer film obtained in Example 5 is observed and is a photograph for measuring an average diameter (in TD) of a cylindrical domain.

DESCRIPTION OF EMBODIMENTS

The dry-blend mixture of the present invention is hereunder described in detail. In the present specification, a prescription considered to be preferred can be arbitrarily adopted, and a combination of preferred prescriptions can be said to be more preferred.

The dry-blend mixture of the present invention is a dry-blend mixture of (A) a metaxylylene group-containing polyamide as described later and (B) an aliphatic polyamide as described later, wherein a mass ratio ((A)/(B)) of the metaxylylene group-containing polyamide (A) and the aliphatic polyamide (B) is in a range of from 55/45 to 65/35.

((A) Metaxylylene Group-Containing Polyamide)

The metaxylylene group-containing polyamide which is used in the present invention contains a diamine unit including 80 mol% or more of a metaxylylenediamine unit based on the diamine unit and a dicarboxylic acid unit including 80 mol% or more of at least one unit selected from the group consisting of an $\alpha,\omega$-linear aliphatic dicarboxylic acid unit having 6 to 12 carbon atoms and an isophthalic acid unit based on the dicarboxylic acid unit, in which a molar ratio of the $\alpha,\omega$-linear aliphatic dicarboxylic acid unit and the isophthalic acid unit (($\alpha,\omega$-linear aliphatic dicarboxylic acid unit)/(isophthalic acid unit)) is 80/20 to 100/0.

From the viewpoint of gas barrier properties, the diamine unit which constitutes the metaxylylene group-containing polyamide includes 80 mol% or more, preferably 90 mol% or more, more preferably 95 mol% or more, and still more preferably substantially 100 mol% based on the diamine unit.

In the metaxylylene group-containing polyamide, examples of a compound which may constitute the diamine unit other than the metaxylylenediamine unit may include diamines having an aromatic ring such as paraxylylenediamine; diamines having an alicyclic ring such as 1,3-bis(aminomethyl)cyclohexane and 1,4-bis(aminomethyl)cyclohexane: and aliphatic diamines such as tetramethylenediamine, hexamethylenediamine, nonamethylenediamine, 2-methyl-1,5-pentanediamine, a polyoxyalkyleneamine and a polyether diamine; however, it should not be construed that the diamine is limited thereto.

From the viewpoint of crystallinity, the dicarboxylic acid unit which constitutes the metaxylylene group-containing polyamide includes 80 mol% or more, preferably 90 mol% or more, more preferably 95 mol% or more, and sill more preferably substantially 100 mol% of at least one unit selected from the group consisting of an $\alpha,\omega$-linear aliphatic dicarboxylic acid unit having 6 to 12 carbon atoms and an isophthalic acid unit based on the dicarboxylic acid unit.

Examples of a compound which constitutes the $\alpha,\omega$-linear aliphatic dicarboxylic acid unit having 6 to 12 carbon atoms include adipic acid, suberic acid, azelaic acid, sebacic acid and dodecanoic acid, however, from the viewpoints of gas barrier properties and crystallinity, adipic acid and sebacic acid are preferred, and adipic acid is more preferred.

Isophthalic acid may be preferably used for production of the metaxylylene group-containing polyamide because the polyamide with an excellent gas barrier performance may be readily obtained without impairing the polycondensation reaction at the time of producing the metaxylylene group-containing polyamide.

In the dicarboxylic acid unit which constitutes the metaxylylene group-containing polyamide, a molar ratio of the $\alpha,\omega$-linear aliphatic dicarboxylic acid unit and the isophthalic acid unit (($\alpha,\omega$-linear aliphatic dicarboxylic acid unit)/(isophthalic acid unit)) is 80/20 to 100/0, preferably 85/15 to 100/0, and more preferably 90/10 to 100/0 from the viewpoint of decreasing a glass transition temperature of the polyamide to impart flexibility to the polyamide.

Examples of a compound which may constitute the dicarboxylic acid unit other than the $\alpha,\omega$-linear aliphatic dicarboxylic acid unit having 6 to 12 carbon atoms and the isophthalic acid unit may include alicyclic dicarboxylic acids such as 1,3-cyclohexanedicarboxylic acid and 1,4-cyclohexanedicarboxylic acid; aromatic dicarboxylic acids other than isophthalic acid, such as terephthalic acid, orthophthalic acid, xylylenedicarboxylic acid and naphthalenedicarboxylic acid; however, it should not be construed that the dicarboxylic acid is limited thereto.

Besides the aforementioned diamine unit and dicarboxylic acid unit, as for a copolymer unit which constitutes the metaxylylene group-containing polyamide, a compound such as a lactam, e.g., $\varepsilon$-caprolactam and laurolactam; an aliphatic aminocarboxylic acid, e.g., aminocaproic acid and aminoundecanoic acid; an aromatic aminocarboxylic acid, e.g., p-aminomethylbenzoic acid may be used as the copolymer unit within a range where the effects of the present invention are not impaired. A ratio of such a copolymer unit in the metaxylylene group-containing polyamide is preferably 20 mol% or less, and more preferably 15 mol% or less.

It is preferred that the metaxylylene group-containing polyamide is produced by the melt polycondensation method (melt polymerization method). For example, there is a method in which a nylon salt composed of a diamine and a dicarboxylic acid is subjected to temperature rise under pressure in the presence of water, and polymerization is performed in a molten state while removing the added water and condensed water. In addition, the metaxylylene group-containing polyamide may also be produced by a method in which a diamine is added directly to a dicarboxylic acid in a molten state, and polycondensation is performed. In this case, in order to keep the reaction system in a uniform liquid state, the diamine is continuously added to the dicarboxylic acid, and the polycondensation is advanced while subjecting the reaction system in such a manner that meanwhile, the reaction temperature does not fall below the melting points of the formed oligoamide and polyamide.

In order to obtain an effect for promoting an amidation reaction or an effect for preventing coloration at the time of polycondensation from occurring, a phosphorus atom-containing compound may be added within the polycondensation system of the metaxylylene group-containing polyamide.

Examples of the phosphorus atom-containing compound include dimethylphosphinic acid, phenylmethylphosphinic acid, hypophosphorous acid, sodium hypophosphite, potassium hypophosphite, lithium hypophosphite, calcium hypophosphite, ethyl hypophosphite, phenylphosphinic acid, sodium phenylphosphinate, potassium phenylphosphinate, lithium phenylphosphinate, ethyl phenylphosphinate, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogenphosphite, sodium phosphite, triethyl phosphite, triphenyl phosphite and pyrophosphorous acid. Among those, in particular, hypophosphorous acid metal salts such as sodium hypophosphite, potassium hypophosphite, lithium hypophosphite and calcium hypophosphite are preferably used because they are not only high in the effect for promoting the amidation reaction but also excellent in the effect for preventing coloration from occurring, with sodium hypophosphite being especially preferred. It should not be construed that the phosphorus atom-containing compound which may be used in the present invention is limited to these compounds.

The addition amount of the phosphorus atom-containing compound which is added within the polycondensation system of the metaxylylene group-containing polyamide is preferably 1 to 500 ppm, more preferably 5 to 450 ppm, and still more preferably 10 to 400 ppm as expressed in terms of a phosphorus atom concentration in the metaxylylene group-containing polyamide from the viewpoint of preventing coloration of the metaxylylene group-containing polyamide from occurring during the polycondensation.

It is preferred to add an alkali metal compound or an alkaline earth metal compound in combination with the phosphorus atom-containing compound within the polycondensation system of the metaxylylene group-containing polyamide. In order to prevent coloration of the metaxylylene group-containing polyamide from occurring during the polycondensation, it is necessary to allow a sufficient amount of the phosphorus atom-containing compound to exist; however, for the purpose of regulating an amidation reaction rate, it is preferred to allow an alkali metal compound or an alkaline earth metal compound to coexist.

Examples thereof include hydroxides of an alkali metal/alkaline earth metal such as lithium hydroxide, sodium hydroxide, potassium hydroxide, rubidium hydroxide, cesium hydroxide, magnesium hydroxide, calcium hydroxide and barium hydroxide; acetates of an alkali metal/alkaline earth metal such as lithium acetate, sodium acetate, potassium acetate, rubidium acetate, cesium acetate, magnesium acetate, calcium acetate and barium acetate. Among those, sodium acetate is especially preferred. It should not be construed that the alkali metal compound or alkaline earth metal compound which may be used in the present invention is limited to these compounds.

In the case of adding the alkali metal compound or alkaline earth metal compound within the polycondensation system of the metaxylylene group-containing polyamide, a value obtained by dividing the molar number of the foregoing compound by the molar number of the phosphorus atom-containing compound is preferably 0.5 to 2.0, more preferably 0.6 to 1.8, and still more preferably 0.7 to 1.5. By allowing the addition amount of the alkali metal compound or alkaline earth metal compound to fall within the aforementioned range, it becomes possible to inhibit formation of a gel while obtaining the effect for promoting the amidation reaction due to the phosphorus atom-containing compound.

The metaxylylene group-containing polyamide obtained through melt polycondensation is once taken out and then pelletized. The obtained pellets may be dried, or for the purpose of further increasing a degree of polymerization, may be subjected to solid phase polymerization. As a heating apparatus which is used for drying or solid phase polymerization, a continuous-type heat drying apparatus, a rotary drum type heating apparatus called a tumble dryer, a conical dryer or a rotary dryer, or a cone type heating apparatus equipped with a rotary blade in the inside thereof, called a Nauta mixer, may be suitably used; however, the method and the apparatus are not limited thereto, and known methods and known apparatuses may be used. In particular, in the case of performing solid phase polymerization of the polyamide, among the aforementioned apparatuses, the rotary drum type heating apparatus is preferably used in view of the matter that not only the inside of the system may be hermetically sealed, but also the polycondensation is readily advanced in a state where oxygen causing the coloration has been removed.

A moisture content of the metaxylylene group-containing polyamide which is used in the present invention is preferably 0.001 to 0.5% by mass, more preferably 0.005 to 0.4% by mass, and still more preferably 0.01 to 0.3% by mass. When the moisture content of the metaxylylene group-containing polyamide is regulated to 0.5% by mass or less, the matter that the moisture is vaporized at the time of molding, whereby air bubbles are generated in a molded product is prevented from occurring. Meanwhile, as the moisture content becomes lower, the viscosity in a softened state becomes high, whereby the layered dispersion state is readily maintained. When the moisture content of the metaxylylene group-containing polyamide is regulated to 0.001% by mass or more, a drying time at the time of production of the metaxylylene group-containing polyamide is made short, whereby coloration or thermal degradation may be prevented from occurring.

((B) Aliphatic Polyamide)

The aliphatic polyamide which is used in the present invention contains 75 to 95 mol% of an ε-aminocaproic acid unit and 25 to 5 mol% of a hexamethylene adipamide unit based on the total constitutional units of the aliphatic polyamide. The aliphatic polyamide which is used in the present invention is a nylon 6/nylon 66 copolymer and is so-called "nylon 6/66".

In the aliphatic polyamide, the content of the ε-aminocaproic acid unit is 75 to 95 mol%, and preferably 80 to 90 mol% based on the total constitutional units of the aliphatic polyamide. When the content of the ε-aminocaproic acid unit is less than 75 mol%, appropriate barrier properties are not obtained, whereas when it is more than 95 mol%, a crystallization rate is too fast, so that the moldability is affected.

The compound which may constitute the ε-aminocaproic acid unit is ε-caprolactam and 6-aminohexanoic acid.

In the aliphatic polyamide, the content of the hexamethylene adipamide unit is 25 to 5 mol%, and preferably 20 to 10 mol% based on the total constitutional units of the aliphatic polyamide. When the content of the hexamethylene adipamide unit is more than 25 mol%, appropriate toughness is not obtained, whereas when it is less than 5 mol%, a crystallization rate is too fast, so that the moldability is affected.

The compound which may constitute the hexamethylene adipamide unit is adipic acid and hexamethylenediamine.

The aliphatic polyamide which is used in the present invention may be produced through copolycondensation of ε-caprolactam and/or 6-aminohexanoic acid, adipic acid, and hexamethylenediamine.

(Melting Point of Polyamide)

A melting point (Tm(A)) of the metaxylylene group-containing polyamide (A) before dry-blending, a melting point (Tm(B)) of the aliphatic polyamide (B) before dry-blending, and a melting point peak (Tm(A,M)) of the metaxylylene group-containing polyamide (A) and a melting point peak (Tm(B,M)) of the aliphatic polyamide (B) in the molded product of the dry-blend mixture are measured by differential scanning calorimetry. Specifically, the measurement is performed by the method described in the Examples as described later. The "molded product of the dry-blend mixture" as referred to in the present invention refers to a molded product obtained by melt-mixing and molding a dry-blend mixture containing the metaxylylene group-containing polyamide (A) and the aliphatic polyamide (B) by an extruder or the like.

It is preferred that Tm(A) and Tm(A,M) satisfy the following relation (1). That is, as for the melting point (Tm(A)) of the metaxylylene group-containing polyamide (A), when a molded product of the dry-blend mixture is formed, a depression from the melting point before dry-blending is preferably within 3.0°C, more preferably within 1.5°C, and still more preferably within 1.0°C.

$$Tm(A) - 3 \leq Tm(A,M) \leq Tm(A) \qquad (1)$$

In the case where the melting point (Tm(A)) of the metaxylylene group-containing polyamide (A) before dry-blending and the melting point (Tm(A,M)) of the metaxylylene group-containing polyamide in the molded product of the dry-blend mixture satisfy the formula (1), compatibilization of the metaxylylene group-containing polyamide (A) and the aliphatic polyamide (B), each of which constitutes the molded product, is suppressed, and therefore, superiority of the respective polyamides is explicitly revealed, whereby the molded product with excellent gas barrier properties and flexibility is provided.

The melting point (Tm(A)) of the metaxylylene group-containing polyamide (A) before dry-blending is preferably 227 to 238°C, and more preferably 228 to 237°C.

The melting point peak (Tm(A,M)) of the metaxylylene group-containing polyamide (A) in the molded product of the dry-blend mixture is within a range of preferably from 225 to 237.5°C, and more preferably from 225.5 to 237°C.

It is preferred that Tm(B) and Tm(B,M) satisfy the following relation (2). That is, as for the melting point (Tm(B)) of the aliphatic polyamide (B), when a molded product of the dry-blend mixture is formed, a depression from the melting point before dry-blending is preferably within 3°C, more preferably within 2.7°C, and still more preferably within 2.5°C.

$$Tm(B) - 3 \leq Tm(B,M) \leq Tm(B) \qquad (2)$$

In the case where the melting point (Tm(B)) of the aliphatic polyamide (B) before dry-blending and the melting point (Tm(B,M)) of the aliphatic polyamide in the molded product of the dry-blend mixture satisfy the formula (2), compatibilization of the metaxylylene group-containing polyamide (A) and the aliphatic polyamide (B), each of which constitutes the molded product, is suppressed, the aliphatic polyamide (B) is dispersed in a cylindrical state in the metaxylylene group-containing polyamide (A), and the molded product with excellent gas barrier properties is provided.

The melting point (Tm(B)) of the aliphatic polyamide (B) before dry-blending as measured by differential scanning calorimetry is preferably 196 to 200°C, and more preferably 197 to 200°C.

The melting point peak (Tm(B,M)) of the aliphatic polyamide (B) in the molded product of the dry-blend mixture is within a range of preferably from 195 to 199°C, and more preferably from 196 to 199°C.

A melting heat quantity of the polyamide (A) of the molded product of the dry-blend mixture is preferably within a range of preferably from -70 to -30 J/g, and more preferably from -60 to -31 J/g in view of the matter that appropriate crystallinity is provided.

A melting heat quantity of the polyamide (B) of the molded product of the dry-blend mixture is preferably within a range of preferably from -55 to -7 J/g, and more preferably from -50 to -8 J/g in view of the matter that appropriate crystallinity is provided.

(Relative Viscosity of Polyamide)

Though there are some indices with respect to the degree of polymerization of the polyamide, the relative viscosity is generally adopted. From the viewpoint of gas barrier properties, the relative viscosity of the metaxylylene group-containing polyamide (A) which is used in the present invention is preferably 1.5 to 4.5, more preferably 2.0 to 4.2, and still more preferably 2.5 to 4.0. From the viewpoint of moldability, the relative viscosity of the aliphatic polyamide (B) which is used in the present invention is preferably 2.5 to 5.0, more preferably 2.8 to 4.8, and still more preferably 3.0 to 4.5. A difference between the relative viscosity of the metaxylylene group-containing polyamide (A) and the relative viscosity of the aliphatic polyamide (B) is within a range of preferably from 0.6 to 1.6, and more preferably 0.7 to 1.5 from the viewpoints of moldability, controllability of a microphase-separated structure, and compatibility.

The relative viscosity as referred to herein refers to a ratio of a fall time (t) obtained by dissolving 0.2 g of the polyamide in 20 mL of 96% by mass sulfuric acid and measuring the solution at 25°C by a Cannon-Fenske viscometer and a fall time ($t_0$) of the 96% by mass sulfuric acid itself as measured in the same manner and is expressed according to the following expression.

$$\text{Relative viscosity} = t/t_0$$

(Mass Ratio of Metaxylylene Group-Containing Polyamide (A) and Aliphatic Polyamide (B))

In the dry-blend mixture of the present invention, a mass ratio ((A)/(B)) of the metaxylylene group-containing polyamide (A) and the aliphatic polyamide (B) is in a range of from 55/45 to 65/35, and preferably from 57/43 to 63/37. When a sum total of the metaxylylene group-containing polyamide (A) and the aliphatic polyamide (B) in the dry-blend mixture of the present invention is defined as 100% by mass, when the content of the metaxylylene group-containing polyamide is less than 55% by mass, the gas barrier properties are not sufficient, whereas when it is more than 65% by mass, the flexibility is insufficient, and in the case of forming into a molded product such as a film, a rate of tensile elongation at break is lowered. On the other hand, when the content of the aliphatic polyamide is more than 45 mol%, the gas barrier properties are not sufficient, whereas when it is less than 35 mol%, the flexibility is not sufficient.

(Dry-Blending)

The dry-blend mixture of the present invention is obtained by dry-blending the aforementioned metaxylylene group-containing polyamide (A) and aliphatic polyamide (B). Specifically, the dry-blend mixture of the present invention may be obtained by a method including a step of dry-blending pellets of the metaxylylene group-containing polyamide (A) and pellets of the aliphatic polyamide (B) in a mass ratio ((A)/(B)) of the metaxylylene group-containing polyamide (A) to the aliphatic polyamide (B) in a range of from 55/45 to 65/35.

In the case of using resin composition pellets obtained by previously melt-mixing the metaxylylene group-containing polyamide (A) and the aliphatic polyamide (B) and further melt-mixing by an extruder or the like, to produce the molded product, a result in which the gas barrier properties are insufficient is brought. On the other hand, in the case of using the dry-blend mixture of the present invention, which is obtained by dry-blending the metaxylylene group-containing polyamide (A) and the aliphatic polyamide (B) and melt-mixing by an extruder or the like, to produce the molded product, the molded product with excellent gas barrier properties, transparency, and toughness may be obtained.

On melt-mixing by an extruder to produce a molded product, what the extrusion temperature is excessively raised, or the residence time is too long is not preferred because the metaxylylene group-containing polyamide (A) and the aliphatic polyamide (B) are compatibilized with each other, whereby the gas barrier properties of the resulting molded product are worsened. The molding temperature is preferably in a range of from 245 to 270°C, and more preferably in a range of from 250 to 265°C. In addition, though the residence time varies with a size of the extruder, or the like and hence, is not unequivocally said, it is preferably 10 minutes or less, and more preferably 5 minutes or less.

In the case of previously melt-mixing the metaxylylene group-containing polyamide (A) and the aliphatic polyamide (B) to prepare resin composition pellets and further melt-mixing the resin composition pellets to produce a molded product, the metaxylylene group-containing polyamide (A) and the aliphatic polyamide (B) are melt-mixed at a stage of preparing the resin composition pellets and compatibilized through an amide exchange reaction. In addition, on producing a molded product such as a film, by using such resin composition pellets, the amide exchange reaction further proceeds to more advance the compatibilization, whereby the gas barrier properties which the metaxylylene group-containing polyamide (A) has are not thoroughly revealed. On the other hand, as for the dry-blend mixture of the present invention, the metaxylylene group-containing polyamide (A) and the aliphatic polyamide (B) are existent as the respective polyamides at the point of time of the mixture, and when the foregoing dry-blend mixture is melt-mixed by an extruder or the like to produce a molded product, the both polyamides are first melt-mixed. Therefore, though the amide exchange reaction proceeds a little, the metaxylylene group-containing polyamide (A) and the aliphatic polyamide (B) are able to maintain the phase-separated state, and therefore, the gas barrier properties which the metaxylylene group-containing polyamide (A) has are exhibited.

(Compatibilization Inhibitor)

The dry-blend mixture of the present invention may further contain a compatibilization inhibitor. As for the dry-blend mixture of the present invention, though even if the compatibilization inhibitor is not contained, the compatibilization between the metaxylylene group-containing polyamide (A) and the aliphatic polyamide (B) on the occasion of molding processing with the foregoing mixture may be inhibited, when the compatibilization inhibitor is contained, the compatibilization may be more surely inhibited, whereby a molded product with stable gas barrier properties and excellent transparency and toughness may be obtained.

As the compatibilization inhibitor, an alkali metal or alkaline earth metal hydroxide and an alkali metal or alkaline earth metal carboxylate are corresponding. The alkali metal or alkaline earth metal carboxylate is preferably an alkali metal or alkaline earth metal carboxylate having 1 to 6 carbon atoms, more preferably an alkali metal or alkaline earth metal carboxylate having 1 to 3 carbon atoms, and still more preferably an alkali metal or alkaline earth metal acetate. Preferred specific examples of the compatibilization inhibitor include sodium hydroxide, potassium hydroxide, calcium hydroxide, sodium acetate, potassium acetate and calcium acetate, and at least one selected from the group consisting of sodium acetate and calcium hydroxide is more preferred.

The content of the compatibilization inhibitor in the dry-blend mixture of the present invention is preferably 300 to 4,000 mass ppm, and more preferably 500 to 3,000 mass ppm based on 100 parts by mass of the total amount of the metaxylylene group-containing polyamide (A) and the aliphatic polyamide (B).

(Preparation Method of Dry-Blend Mixture)

A production method of the dry-blend mixture of the present invention includes a step of dry-blending pellets of the metaxylylene group-containing polyamide (A) and pellets of the aliphatic polyamide (B) in a mass ratio ((A)/(B)) of the metaxylylene group-containing polyamide (A) to the aliphatic polyamide (B) in a range of from 55/45 to 65/35. In the case of adding the compatibilization inhibitor, on dry-blending the metaxylylene group-containing polyamide (A) and the aliphatic polyamide (B), it is preferred to add 300 to 4,000 mass ppm of the compatibilization inhibitor based on 100 parts by mass of the total amount of the metaxylylene group-containing polyamide (A) and the aliphatic polyamide (B).

The dry-blend mixture of the present invention may be prepared by mixing the metaxylylene group-containing polyamide (A) and the aliphatic polyamide (B) and if desired, further the compatibilization inhibitor by using a known mixing apparatus such as a tumbler mixer and a Nauta mixer. In addition, it is possible to purge the mixing apparatus with an inert gas such as nitrogen and the mixing apparatus is preferably of an internal structure in which oxygen or moisture is hard to penetrate from the outside.

(Additive and Spreading Agent)

It is preferred that the dry-blend mixture of the present invention contains ethylene bis(stearamide) or calcium stearate from the viewpoint of inhibiting generation of a gelled material on molding processing the foregoing mixture and the viewpoint of improving extrusion processability. The content of such a compound in the dry-blend mixture is preferably 100 to 4,000 mass ppm, more preferably 200 to 3,000 mass ppm, and still more preferably 300 to 2,000 mass ppm. In addition, the ethylene bis(stearamide) or calcium stearate is preferably vegetable.

It is preferred that the ethylene bis(stearamide) or calcium stearate is spread on the surface of the dry-blend mixture through a nonionic surfactant.

An average particle diameter of the ethylene bis(stearamide) or calcium stearate is preferably 0.01 to 3.0 mm, and more preferably 0.02 to 1.0 mm from the viewpoint of being uniformly spread on the surface of the dry-blend mixture.

Specific examples of the nonionic surfactant include a fatty acid monoglyceride, a fatty acid diglyceride, a fatty acid triglyceride, a fatty acid alkyl ester, an alkyl alcohol, a polyoxyethylene alkyl ether, a polyoxyethylene alkyl phenyl ether, an alkyl diethanolamine, a hydroxyalkyl monoethanolamine, a polyoxyethylene alkylamine, a polyoxyethylene alkylamine fatty acid ester, an isoalkyl carboxylic acid polyoxyethylene glyceryl, a triisoalkyl carboxylic acid polyoxyethylene glyceryl, a monoalkyl carboxylic acid polyoxyethylene trimethylolpropane, a dialkyl carboxylic acid polyoxyethylene trimethylolpropane, a fatty acid monoethanolamide, a fatty acid diethanolamide, a fatty acid monoisopropanolamide, a polyoxyethylene fatty acid amide, a monoalkyl carboxylic acid polyoxyethylene sorbitan, an alkyl carboxylic acid polyoxyethylene sorbitan, a monoalkyl carboxylic acid sorbitan, a sesquialkyl carboxylic acid sorbitan, a dialkyl carboxylic acid sorbitan, a trialkyl carboxylic acid sorbitan, a tetraalkyl carboxylic acid sorbitan, a monofatty acid polyethylene glycol, a difatty acid polyethylene glycol, an alkyl carboxylic acid polyoxyethylene sorbitol and a sucrose fatty acid ester. Though there is no particular limitation, the nonionic surfactant is preferably an alkyl carboxylic acid polyoxyethylene sorbitan, and more preferably polyoxyethylene sorbitan monolaurate.

The content of the nonionic surfactant in the dry-blend mixture is preferably 30 to 800 mass ppm, more preferably 50 to 600 mass ppm, and still more preferably 80 to 400 mass ppm.

It is preferred that a production method of the dry-blend mixture in which ethylene bis(stearamide) or calcium stearate is spread on the surface of the dry-blend mixture includes, after the step of dry-blending the metaxylylene group-containing polyamide (A) and the aliphatic polyamide (B), a step of adding 30 to 800 mass ppm of the nonionic surfactant based on 100 parts by mass of the total amount of the metaxylylene group-containing polyamide (A) and the aliphatic polyamide (B) and subsequently adding 100 to 4,000 mass ppm of ethylene bis(stearamide) or calcium stearate based on 100 parts by mass of the total amount of the metaxylylene group-containing polyamide (A) and the aliphatic polyamide (B).

(Molded Product)

A variety of molded products may be obtained by melt-mixing the dry-blend mixture of the present invention and then subjecting the melt to molding processing. Examples of the molded product include a film, a sheet, an injection-molded bottle, a blow bottle and an injection-molded cup, with a film and a sheet being preferred. It is preferred that each of the film and the sheet includes a layer formed of the dry-blend mixture of the present invention.

The layer configuration in the film or sheet is not particularly limited, and the layer number or kind is not particularly limited. The film or sheet may be a single-layer composed of only "layer (A)" which is formed of the dry-blend mixture of the present invention, or may be a multilayer having the layer (A) and other layer. In the case where a layer formed of the dry-blend mixture of the present invention is defined as "layer (A)", and a layer made of other resin than that is defined as "layer (B)", the multilayer configuration may be an A/B configuration composed of the layer (A) of a single layer and the layer (B) of a single layer; may be a three-layer configuration of B/A/B composed of the layer (A) of a single layer and the layer (B) of two layers; or may be a three-layer configuration of A/B/A composed of the layer (A) of two layers and the layer (B) of a single layer. In addition, the multilayer configuration may also be a five-layer configuration of B1/B2/A/B2/B1 composed of the layer (A) of a single layer and the layer (B) of four layers of two kinds of a layer (B1) and a layer (B2). Furthermore, each of a multilayer film and a multilayer sheet may include an arbitrary layer such as an adhesive layer (AD), as the need arises, and for example, may be a five-layer configuration of B/AD/A/AD/B or a five-layer configuration of A/AD/A/AD/B.

As the resin which constitutes the layer made of other resin than the dry-blend mixture of the present invention, an arbitrary resin may be used, and there is no particular limitation. For example, a thermoplastic resin may be used, and specifically, examples thereof may include a polyolefin (for example, polyethylene and polypropylene), a polyester (for example, polyethylene terephthalate (PET) and polybutylene terephthalate (PBT)), a polyamide (exclusive of the dry-blend mixture of the present invention; for example, nylon 6, nylon 66, nylon 6/66, and poly(metaxylylene adipamide) (MXD6)), an ethylene-vinyl alcohol copolymer (EVOH), and a plant-derived resin (for example, polylactic acid and polyglycolic acid). It is preferred that at least one selected from the group consisting of those resins is contained.

Examples of the arbitrary layer which may be included in the multilayer film or multilayer sheet include an adhesive layer, a metal foil and a metal vapor deposition layer.

It is preferred that the adhesive layer includes a thermoplastic resin having adhesiveness. Examples of the thermoplastic resin having adhesiveness include acid-modified polyolefin resins in which a polyolefin-based resin such as polyethylene and polypropylene is modified with an unsaturated carboxylic acid such as acrylic acid, methacrylic acid, maleic acid, maleic anhydride, fumaric acid and itaconic acid. As the adhesive layer, from the viewpoint of adhesiveness, it is preferred to use a layer resulting from modification with a resin of the same kind as the resin which constitutes the layer made of other resin than the dry-blend mixture of the present invention. From the viewpoint of securing the molding processability while exhibiting a practical adhesive strength, a thickness of the adhesive layer is preferably 2 to 100 $\mu$m, more preferably 5 to 90 $\mu$m, and still more preferably 10 to 80 $\mu$m.

As the metal foil, an aluminum foil is preferred. From the viewpoints of gas barrier properties, light shading properties, flex resistance, and so on, a thickness of the metal foil is preferably 3 to 50 $\mu$m, more preferably 3 to 30 $\mu$m, and still more preferably 5 to 15 $\mu$m.

As the metal vapor deposition layer, a resin film resulting from vapor deposition with a metal or metal oxide film of aluminum or alumina may be used. A forming method of the vapor deposition film is not particularly limited, and examples thereof include a physical vapor deposition method such as a vacuum vapor deposition method, a sputtering method and an ion plating method; a chemical vapor deposition method such as PECVD. From the viewpoints of gas barrier properties, light shading properties, flex resistance, and so on, a thickness of the vapor deposition film is preferably 5 to 500 nm, and more preferably 5 to 200 nm.

A production method of the molded product is not particularly limited, and the molded product may be produced by an arbitrary method, and for example, it may be produced through extrusion molding or injection molding. In addition, the molded product obtained through extrusion molding or injection molding may be further subjected to molding processing by uniaxial stretching, biaxial stretching or stretch blow molding. In addition, from the viewpoint of surely inhibiting compatibilization between the metaxylylene group-containing polyamide (A) and the aliphatic polyamide (B) on the occasion of molding processing using the dry-blend mixture of the present invention, the dry-blend mixture of the present invention and the compatibilization inhibitor may be charged into an extruder, followed by melt-mixing the dry-blend mixture of the present invention and the compatibilization inhibitor within the extruder.

Specifically, a film or sheet may be formed by an extrusion method provided with a T-die, an inflation film method, or the like, and a stretched film or a heat shrinkable film may be obtained by further subjecting the obtained raw film to stretch processing. Examples of the stretching method include sequential biaxial stretching or simultaneous biaxial stretching of continuously stretching the extruded film by a tenter system, and simultaneous biaxial stretching by an inflation system. In addition, a batch-type biaxial stretching apparatus may be used. Though an extrusion stretch ratio may be properly determined according to an application of the film, it is preferred to biaxially stretch the film 1.1 to 15 times in MD and 1.1 to 15 times in TD, respectively.

The dry-blend mixture of the present invention may be formed into an injection molded cup by the injection molding method and a blow bottle by the blow molding method, respectively. In addition, after subjecting the dry-blend mixture of the present invention to injection molding to produce a preform, the resulting preform may be further formed into a bottle by blow molding.

A multilayer film having at least one layer formed of the dry-blend mixture of the present invention may also be formed through combination with other resin, for example, polyethylene, polypropylene, nylon 6, or PET, a metal foil or a paper by a method such as extrusion lamination and coextrusion.

The processed film or sheet may be utilized for a wrap or a pouch of every shape, a lid material of container, or a packaging container such as a bottle, a cup, a tray and a tube. In addition, the processed film or sheet may also be processed into a preform or bottle of a multilayer structure with PET, etc. by a multilayer injection molding method or the like.

A film packaging container may also be produced by using a film including a layer formed of the dry-blend mixture of the present invention for the whole or a part of the container. The form of the film packaging container is not particularly limited and may be selected within an appropriate range according to articles to be housed or stored. Specific examples thereof include a three sided seal sack, a standing pouch, a gusseted packaging bag, a pillow packaging bag and a shrink film packaging.

As for the molded product of the dry-blend mixture of the present invention, from the viewpoints of gas barrier properties, transparency, and toughness, it is preferred that a microphase-separated structure is existent without compatibilization of the metaxylylene group-containing polyamide (A) and the aliphatic polyamide (B), and in particularly, it is preferred that a cylindrical structure is existent. In view of the fact that a cylindrical structure is existent, the molded product has a pseudo-layer structure, and therefore, it is excellent in gas barrier properties. This is remarkable especially in a stretched molded product such as a stretched film and a blow bottle.

It is preferred that a cylindrical domain of the cylindrical structure is the aliphatic polyamide (B) from the viewpoints of gas barrier properties, transparency, and toughness. From the viewpoint of forming a pseudo-layer structure, a diameter of the cylindrical domain is preferably 100 to 200 nm, and more preferably 120 to 180 nm. In addition, from the same viewpoint, a length in MD of the cylindrical domain is preferably 200 nm to 3 $\mu$m, and more preferably 250 nm to 1 $\mu$m, and it is preferred that the length in MD is longer than a length in TD.

In the molded product of the present invention, it is possible to confirm whether or not the cylindrical structure is existent by the method described in the Examples.

The molded product obtained by using the dry-blend mixture of the present invention is excellent in gas barrier properties, transparency, and toughness. Such a molded product may be used as a packaging material, a packaging container, or a fiber material.

The film packaging container using the dry-blend mixture of the present invention is excellent in gas barrier properties and transparency, and therefore, it is suitable for packaging of a variety of articles.

Examples of the article to be stored may include beverages such as milk, milk products, juice, coffee, tea beverages and alcohol beverages; liquid seasonings such as Worcester sauce, soy sauce and dressing; cooked foods such as soup, stew, curry, infant cooked foods and nursing care cooked foods; paste foods such as jam and mayonnaise; processed seafood such as tuna and other seafood; processed milk products such as cheese and butter; processed meat products such as meat, salami, sausage and ham; vegetables such as carrot and potato; eggs; noodles; processed rice products such as uncooked rice, cooked rice and rice porridge; dry foods such as powder seasonings, powder coffee, infant powder milk, powder diet foods, dried vegetables and rice crackers; chemicals such as agrichemicals and insecticides; medical drugs; cosmetics; pet foods; sundry articles such as a shampoo, a conditioner and a cleanser; and various other articles.

Before or after charging such an article to be stored, the film packaging container or the article to be stored may be subjected to sterilization in a form suitable for the article to be stored. Examples of the sterilization method include heat sterilization such as a hydrothermal treatment at 100°C or lower, a pressurized hydrothermal treatment at 100°C or higher and an ultrahigh temperature heat treatment at 130°C or higher; electromagnetic wave sterilization with an ultraviolet ray, a microwave or a gamma wave; a gas treatment with ethylene oxide; chemical sterilization with hydrogen peroxide or hypochlorous acid.

EXAMPLES

The present invention is hereunder described in more detail with reference to Examples. Various evaluations in the Examples and so on were performed by the following methods.

(1) Relative Viscosity

0.2 g of a sample was precisely weighed and completely dissolved in 20 mL of 96% by mass sulfuric acid at 20 to 30°C under stirring. After completely dissolved, 5 mL of the solution was quickly taken into a Cannon-Fenske type viscometer, which was then allowed to stand in a thermostat chamber at 25°C for 10 minutes, and thereafter, a fall time (t) was measured. In addition, a fall time ($t_0$) of the 96% by mass sulfuric acid itself was measured in the same manner. The relative viscosity was calculated from t and $t_0$ according to the following expression.

$$\text{Relative viscosity} = t/t_0$$

(2) Melting Point and Melting Heat Quantity

Using a differential scanning calorimeter "DSC-60" (manufactured by Shimadzu Corporation), the DSC measurement (differential scanning calorimetry) was performed in a nitrogen gas stream at a temperature rise rate of 10°C/min, thereby determining the melting point and the melting heat quantity.

(3) Tensile Strength Test

Using a tensile tester "Strograph V1-C" (manufactured by Toyo Seiki Seisaku-sho, Ltd.), each of the films obtained in the Examples or Comparative Examples was subjected to humidity control in an atmosphere at 23°C and 50% RH (relative humidity) for one week and then measured for a tensile modulus of elasticity, a tensile strength at break, and a tensile elongation at break in conformity with ASTM D882.

(4) Haze (HAZE) and Yellow Index (YI)

Using a haze value measuring apparatus "COH-400A" (manufactured by Nippon Denshoku Industries Co., Ltd.), each of the films obtained in the Examples or Comparative Examples was subjected to humidity control in an atmosphere at 23°C and 50% RH (relative humidity) for one week and then measured for HAZE and YI in conformity with JIS K7105.

(5) Oxygen Transmission Rate (OTR) (Oxygen Barrier Properties of Single-layer Film and Multilayer Film)

Using an oxygen transmission rate measurement apparatus "OXTRAN 2/21SH" (manufactured by MOCON Inc.), the measurement was carried out in an atmosphere at 23°C and 60% RH (relative humidity) until a value of the oxygen transmission rate became stable in conformity with ASTM D3985.

(6) Oxygen Transmission Rate (OTR) after Retort Treatment (Oxygen Barrier Properties of Multilayer Film)

Using an autoclave "SR-240" (manufactured by Tomy Seiko Co., Ltd.), a multilayer film was subjected to a retort treatment at 121 °C for 30 minutes, and thereafter, using an oxygen transmission rate measurement apparatus "OXTRAN 2/61" (manufactured by MOCON Inc.), a 180-day oxygen transmission rate was measured in an atmosphere at 23°C and 60% RH (relative humidity) or at 23°C and 80% RH (relative humidity) in conformity with ASTM D3985. From the obtained results, a 30-day cumulative oxygen transmission amount and a 180-day cumulative oxygen transmission amount were calculated.

(7) Measurement of Domain Size by Morphology Observation

A multilayer film sample was cut out in a size of 1 cm × 3 cm, and an epoxy resin was then applied on the front and back surfaces of the film sample, followed by solidifying at normal temperature for 24 hours. An ultra-thin slice having a thickness of 100 nm was prepared from each of the MD and TD cross-sections of the solidified sample. This ultra-thin slice was dyed with ruthenium tetroxide, the dyed ultra-thin slice was then subjected to morphology observation under the following conditions by using a reliability-proven ultra-high-resolution field-emission scanning electron microscope "FE-SEM SU-8020" (manufactured by Hitachi High-Technologies Corporation), and an average domain size was measured from an observed image.

With respect to an average diameter (in TD) and a length in MD of the cylindrical domain, a range of 100 $\mu$m

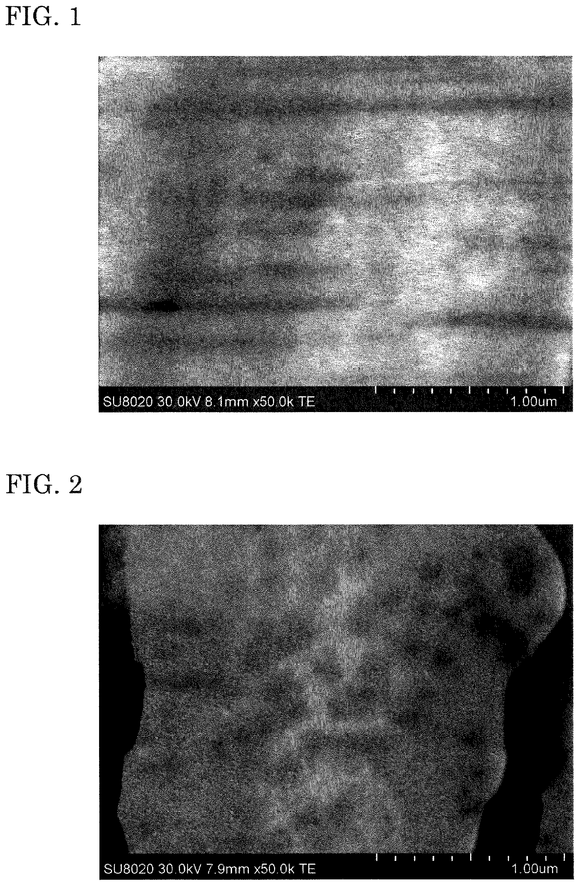

× 20 μm of the gas barrier layer of the multilayer film was observed by FE-SEM, plural domains existent in that region were measured for the length in MD and the length in TD of each of the domains, and an average value thereof was adopted. As a representative example, SEM photographs in which the morphology of the gas barrier layer of the multilayer film obtained in Example 5 was observed are shown in Figs. 1 and 2. Fig. 1 is a photograph for measuring the length in MD of the cylindrical domain, and Fig. 2 is a photograph for measuring the average diameter (in TD) of the cylindrical domain. In Figs. 1 and 2, the areas which are black observed are the cylindrical domain derived from the aliphatic polyamide (B1).

(SEM Observation Conditions)

Accelerating voltage: 30 kV
Observation magnification: 50,000 times
Working distance: 8 mm
Detector: TE
Tilt: No
Probe current: 20 μA, Normal
Condenser lens: 5
Conductivity imparting treatment: W-vapor deposition (3 minutes)

(8) Impact Strength

The multilayer stretched film obtained in Example 13 was subjected to humidity control in an atmosphere at 23°C and 50% RH (relative humidity), and the measurement was then carried out using a film impact tester "ITF-60" (manufactured by Tosoku Seimitsu Kogyo Co., Ltd.) and using a weight of 30 kg·cm having a 1/2-inch spherical tip.

(9) Degree of Shrinkage at Storage

A regular square of 10 cm × 10 cm was drawn in the center of the multilayer stretched film obtained in Example 13; the film was then allowed to stand in a thermo-hygrostat chamber at 40°C and 50% RH for 3 hours; an area of the regular square was then measured; and the degree of shrinkage was determined from the areas before and after the heat treatment.
Similarly, the biaxially stretched film obtained in Example 13 was allowed to stand at 40°C and 50% RH for 48 hours, and its degree of shrinkage was then measured.

(10) Degree of Shrinkage after Boiling

A regular square of 10 cm × 10 cm was drawn in the center of the multilayer stretched film obtained in Example 13 and then subjected to a boiling treatment at 90°C for 30 minutes by using an autoclave "SR-240" (manufactured by Tomy Seiko Co., Ltd.). After the boiling treatment, the resulting film was subjected to humidity control in an atmosphere at 23°C and 50% RH (relative humidity) for one week, an area of the regular square was then measured, and the degree of shrinkage was determined from the areas before and after the heat treatment.

(11) Maximum Degree of Shrinkage

A regular square of 10 cm × 10 cm was drawn in the center of the multilayer stretched film obtained in Example 13, and the resulting film was charged in a hot-air dryer and subjected to a heat treatment at 120°C for 30 seconds. An area of the regular square after the heat treatment was measured, and the degree of shrinkage was determined from the areas before and after the heat treatment.

Production Example 1

(Production of Metaxylylene Group-Containing Polyamide (A1))

A pressure-resistant reaction vessel having an inner capacity of 50 liters, which was provided with a stirrer, a partial condenser, a total condenser, a pressure regulator, a thermometer, a dropping tank, a pump, an aspirator, a nitrogen introducing pipe, a bottom outlet valve, and a strand die, was charged with 13,000 g (88.95 mol) of precisely weighed adipic acid (AA), 0.3749 g (0.0035 mol) of sodium hypophosphite, and 0.1944 g (0.0024 mol) of sodium acetate; after thoroughly purging with nitrogen, the inside of the reaction vessel was hermetically sealed; and the temperature was raised to 170°C under stirring while keeping the inside of the reaction vessel at 0.4 MPaG.

After reaching 170°C, dropping of 12,042 g (88.42 mol) of metaxylylenediamine (MXDA) stored in the dropping tank in the molten raw materials within the reaction vessel was commenced, and the inside of the reaction vessel was continuously subjected to temperature rise to 260°C while keeping the pressure within the reaction vessel at 0.4 MPaG and removing formed condensed water outside the system.

After completion of dropping of metaxylylenediamine, the inside of the reaction vessel was gradually returned to atmospheric pressure, and subsequently, the pressure within the reaction vessel was reduced to 80 kPaG by using the aspirator, thereby removing the condensed water. A stirring torque of the stirrer was observed during the pressure reduction; at the point of time of reaching a predetermined torque, the stirring was stopped; the pressure within the reaction vessel was increased with nitrogen; the bottom outlet valve was opened; a polymer was extracted from the strand die to form a strand; and the strand was then cooled and pelletized with a pelletizer.

Subsequently, the pellets were charged in a stainless steel-made rotary drum type heating apparatus, and the heating apparatus was rotated at 5 rpm. The reaction system was thoroughly purged with nitrogen, and the temperature within the reaction system was raised from room temperature (23 °C) to 150°C in a nitrogen gas stream of a small amount. At the point of time when the temperature within the reaction system reached 150°C, the pressure was reduced to 1 torr or less, and furthermore, the temperature within the reaction system was raised to 190°C over 110 minutes. After the temperature within the reaction system reached 180°C, a solid phase polymerization reaction was continued at the same temperature for 120 minutes. After completion of the reaction, the pressure reduction was terminated; the temperature within the reaction system was decreased in a nitrogen gas stream; and at the point of time of reaching 60°C, the pellets were taken out, thereby obtaining a metaxylylene group-containing polyamide (A1) (relative viscosity: 2.65, melting point: 237.0°C) that is an MXDA/AA copolymer (MXDA/AA = 49.85/50.15 (mol%)).

Production Example 2

(Production of Metaxylylene Group-Containing Polyamide (A2))

A metaxylylene group-containing polyamide (A2) (relative viscosity: 3.2, melting point: 237.0°C) that is an MXDA/AA copolymer (MXDA/AA = 49.85/50.15 (mol%)) was obtained in the same manner as in Production Example 1, except that the solid phase polymerization time was changed to 180 minutes after the temperature within the reaction system reached 180°C.

Production Example 3

(Production of Metaxylylene Group-Containing Polyamide (A3))

A pressure-resistant melt polymerization vessel having an inner capacity of 50 liters, which was provided with a stirrer, a partial condenser, a total condenser, a pressure regulator, a thermometer, a dropping tank, a pump, an aspirator, a nitrogen introducing pipe, a bottom outlet valve, and a strand die, was charged with 12,120 g (82.94 mol) of precisely weighed adipic acid, 880 g (5.29 mol) of isophthalic acid (IPA), 10.96 g (0.10 mol) of sodium hypophosphite, and 5.68 g (0.07 mol) of sodium acetate; after thoroughly purging with nitrogen, the inside of the melt polymerization vessel was hermetically sealed; and the temperature was raised to 170°C under stirring while keeping the inside of the melt polymerization vessel at 0.4 MPaG.

After reaching 170°C, dropping of 11,520 g (84.59 mol) of metaxylylenediamine (MXDA) (charge molar ratio of (diamine component)/(dicarboxylic acid component) (MXDA/(AA + IPA)) = 0.9587) stored in the dropping tank in the molten raw materials within the melt polycondensation vessel was commenced, and the inside of the melt polymerization vessel was continuously subjected to temperature rise to 260°C while keeping the pressure within the melt polymerization vessel at 0.4 MPaG and removing formed condensed water outside the system.

After completion of dropping of metaxylylenediamine, the inside of the melt polymerization vessel was gradually returned to atmospheric pressure, and subsequently, the pressure within the melt polymerization vessel was reduced to 80 kPaG by using the aspirator, thereby removing the condensed water. A stirring torque of the stirrer was observed during the pressure reduction; at the point of time of reaching a predetermined torque, the stirring was stopped; the pressure within the melt polymerization vessel was increased with nitrogen; and the bottom outlet valve was opened, thereby obtaining a metaxylylene group-containing polyamide (A3) (isophthalic acid content: 6 mol%) (relative viscosity: 2.65, melting point: 229.0°C).

Production Example 4

(Production of Aliphatic Polyamide (B2))

In the reaction vessel used in Production Example 1, an aliphatic polyamide (B1) and an aliphatic polyamide (B3) as described later were regulated in a ratio of ε-caprolactam/hexamethylene-adipic acid salt of 70/30 (mol%); after thoroughly purging with nitrogen, the inside of the reaction vessel was hermetically sealed; and the temperature was raised to 220°C under stirring while keeping the inside of the reaction vessel at 0.4 MPaG. The reaction system was maintained as it was for 30 minutes while keeping the pressure within the reaction vessel at 0.4 MPaG and removing formed condensed water outside the system. The inside of the reaction vessel was gradually returned to atmospheric pressure, and subsequently, the pressure within the reaction vessel was reduced to 80 kPaG by using the aspirator, thereby removing the condensed water. A stirring torque of the stirrer was observed during the pressure reduction; at the point of time of reaching a predetermined torque, the stirring was stopped; the pressure within the reaction vessel was increased with nitrogen; the bottom outlet valve was opened; a polymer was extracted from the strand die to form a strand; and the strand was then cooled and pelletized with a pelletizer.

Subsequently, the pellets were charged in a stainless steel-made rotary drum type heating apparatus, and the heating apparatus was rotated at 5 rpm. The reaction system was thoroughly purged with nitrogen, and the temperature within the reaction system was raised from room temperature (23°C) to 150°C in a nitrogen gas stream of a small amount. At the point of time when the temperature within the reaction system reached 150°C, the pressure was reduced to 1 torr or less, and furthermore, the temperature within the reaction system was raised to 190°C over 110 minutes. After the temperature within the reaction system reached 180°C, a solid phase polymerization reaction was continued at the same temperature for 90 minutes. After completion of the reaction, the pressure reduction was terminated; the temperature within the reaction system was decreased in a nitrogen gas stream; and at the point of time of reaching 60°C, the pellets were taken out, thereby obtaining an aliphatic polyamide (B2) (polyamide 6/66) (relative viscosity: 4.1, melting point: 184.3°C) having a ratio of the ε-aminocaproic acid unit to the hexamethylene adipamide unit of 70/30 (mol%).

As other aliphatic polyamides (B), lubricants, a nonionic surfactant, and compatibilization inhibitors, the following materials were used.

Aliphatic polyamide (B1): Polyamide 6/66 "Novamid 2030FC" (manufactured by DSM, a ratio of ε-aminocaproic acid unit to hexamethylene adipamide unit: 85/15 (mol%), relative viscosity: 4.1, melting point: 199.0°C)

Aliphatic polyamide (B3): Polyamide 6 "UBE Nylon 1022B" (manufactured by Ube Industries, Ltd., relative viscosity: 3.5, melting point: 225.0°C)

Lubricant (L1): Calcium stearate "Calcium Stearate S" (fine powder, manufactured by NOF Corporation)

Lubricant (L2): Ethylene bis(stearamide) "ALFLOW H-50S" (manufactured by NOF Corporation, average particle diameter: 190 μm)

Nonionic surfactant: Polyoxyethylene sorbitan monolaurate "NONION LT-221" (manufactured by NOF Corporation)

Compatibilization inhibitor (S1): Calcium hydroxide

Compatibilization inhibitor (S2): Sodium acetate

(Non-stretched Film)

Example 1

A tumbler type mixer was used, after purging with nitrogen, the metaxylylene group-containing polyamide (A1) and the aliphatic polyamide (B1) were charged in the apparatus in a mass ratio (A1)/(B1) of 60/40 and mixed while allowing nitrogen to flow therethrough, thereby preparing a dry-blend mixture.

Using a single-screw film production apparatus equipped with a full-flight twin-screw having a diameter of 25 mm, a feed block, a T-die, a chill roll, a winder, and others, dry-blend pellets having a mass ratio (A1)/(B1) of the metaxylylene group-containing polyamide (A1) and the aliphatic polyamide (B1) of 60/40 were charged in an extruder and extruded at 15 rpm and 255°C, thereby producing a non-stretched film having a thickness of 30 μm. At that time, a residence time of the dry-blend pellets within the extruder was about 6 minutes. The produced film was measured for DSC, tensile mechanical properties, OTR, HAZE, and YI. The results are shown in Table 1.

Example 2

A non-stretched film was produced in the same manner as in Example 1, except for changing the temperature of the extruder to 265°C, and the various evaluations were carried out. The results are shown in Table 1.

Example 3

A non-stretched film was produced in the same manner as in Example 1, except for using the metaxylylene group-containing polyamide (A2) in place of the metaxylylene group-containing polyamide (A1), and the various evaluations were carried out. The results are shown in Table 1.

Example 4

A non-stretched film was produced in the same manner as in Example 1, except for using the metaxylylene group-containing polyamide (A3) in place of the metaxylylene group-containing polyamide (A1), and the various evaluations were carried out. The results are shown in Table 1.

Comparative Example 1

A non-stretched film was produced in the same manner as in Example 1, except for using dry-blend pellets having a mass ratio (A1)/(B1) of the metaxylylene group-containing polyamide (A1) and the aliphatic polyamide (B1) of 70/30, and the various evaluations were carried out. The results are shown in Table 1.

Comparative Example 2

A non-stretched film was produced in the same manner as in Example 1, except for using dry-blend pellets having a mass ratio (A1)/(B1) of the metaxylylene group-containing polyamide (A1) and the aliphatic polyamide (B1) of 50/50, and the various evaluations were carried out. The results are shown in Table 1.

Comparative Example 3

A non-stretched film was produced in the same manner as in Example 1, except for using the aliphatic polyamide (B2) in place of the aliphatic polyamide (B1), and the various evaluations were carried out. The results are shown in Table 1.

Comparative Example 4

Using a twin-screw extruder "TEM-37 BS" (manufactured by Toshiba Machine Co., Ltd.) having a diameter of 37 mm, dry-blend pellets having a mass ratio (A1)/(B1) of the metaxylylene group-containing polyamide (A1) and the aliphatic polyamide (B1) of 60/40 were melt-mixed under conditions such that the extrusion temperature was 255°C (preset temperature: 250°C, screw rotation number: 150 rpm) and extruded in a strand form; and the strand was then cooled and pelletized with a pelletizer. At that time, a residence time was about 3 minutes. The thus obtained pellets by melt-mixing were vacuum dried at 140°C for 5 hours by a vacuum dryer. Thereafter, a non-stretched film was produced in the same manner as in Example 1, and the various evaluations were carried out. The results are shown in Table 1.

Comparative Example 5

Using a twin-screw extruder "TEM-37 BS" (manufactured by Toshiba Machine Co., Ltd.) having a diameter of 37 mm, dry-blend pellets having a mass ratio (A1)/(B1) of the metaxylylene group-containing polyamide (A1) and the aliphatic polyamide (B1) of 60/40 were melt-mixed under conditions such that the extrusion temperature was 295°C (preset temperature: 300°C, screw rotation number: 100 rpm) and extruded in a strand form; and the strand was then cooled and pelletized with a pelletizer. At that time, a residence time was about 5 minutes. The thus obtained pellets by melt-mixing were vacuum dried at 140°C for 5 hours by a vacuum dryer. Thereafter, a non-stretched film was produced in the same manner as in Example 1, and the various evaluations were carried out. The results are shown in Table 1.

Comparative Example 6

A non-stretched film was produced in the same manner as in Example 1, except for using the aliphatic polyamide (B3) in place of the aliphatic polyamide (B1), and the various evaluations were carried out. The results are shown in Table 1.

Comparative Example 7

A non-stretched film was produced in the same manner as in Example 1, except for using only the metaxylylene group-containing polyamide (A1) without being blended, and the various evaluations were carried out. The results are shown in Table 1.

Comparative Example 8

A non-stretched film was produced in the same manner as in Example 1, except for using only the aliphatic polyamide (B1) without being blended, and the various evaluations were carried out. The results are shown in Table 1.

Table 1 Comparative Example

| | | | Example | | | | Comparative Example | | | | | | | |
|---|---|---|---|---|---|---|---|---|---|---|---|---|---|---|
| | | | 1 | 2 | 3 | 4 | | 2 | 3 | 4 | 5 | 6 | 7 | 8 |
| Polyamide resin | Polyamide (A) | - | A1 | A1 | A2 | A3 | A1 | A1 | A1 | A1 | A1 | A1 | A1 | - |
| | Melting point Tm (A) of polyamide (A) | °C | 237.0 | 237.0 | 237.0 | 229.0 | 237.0 | 237.0 | 237.0 | 237.0 | 237.0 | 237.0 | 237.0 | - |
| | Polyamide (B) | - | B1 | B1 | B1 | B1 | B1 | B1 | B2 | B1 | B1 | B3 | - | B1 |
| | Melting point Tm (B) of polyamide (B) | °C | 199.0 | 199.0 | 199.0 | 199.0 | 199.0 | 199.0 | 184.3 | 199.0 | 199.0 | 225.0 | - | 199.0 |
| | Relative viscosity of polyamide (A) | - | 2.65 | 2.65 | 3.2 | 2.65 | 2.65 | 2.65 | 2.65 | 2.65 | 2.65 | 2.65 | - | - |
| | Relative viscosity of polyamide (B) | - | 4.1 | 4.1 | 4.1 | 4.1 | 4.1 | 4.1 | 4.1 | 4.1 | 4.1 | 3.5 | - | 4.1 |
| | Difference in relative viscosity | | 1.45 | 1.45 | 0.90 | 1.50 | 1.45 | 1.45 | 1.45 | 1.45 | 1.45 | 0.85 | - | - |
| | | - | - | - | - | - | - | - | - | - | - | - | - | - |
| Lubricant Mixing ratio | Polyamide (A) | wt% | 60 | 60 | 60 | 60 | 70 | 50 | 60 | 60 | 60 | 60 | 100 | 0 |
| | Polyamide (B) | wt% | 40 | 40 | 40 | 40 | 30 | 50 | 40 | 40 | 40 | 40 | 0 | 100 |
| | Lubricant | ppm | 0 | 0 | 0 | 0 | 0 | 0 | 0 | 0 | 0 | 0 | 0 | - |
| Mixing method | | - | Dry | Dry | Dry | Dry | Dry | Dry | Dry | Melt-Im | Melt-Im | Dry | - | - |

(continued)

| | | | Example | | | | Comparative Example | | | | | | | |
|---|---|---|---|---|---|---|---|---|---|---|---|---|---|---|
| | | | 1 | 2 | 3 | 4 | | 2 | 3 | 4 | 5 | 6 | 7 | 8 |
| Thermal properties of molded product (DSC) | Melting point Tm (A,M) of polyamide | °C | 236.3 | 236.3 | 236.5 | 228.3 | 236.5 | 236.8 | 236.7 | 235.9 | 232.6 | 236.6 | 236.7 | - |
| | (A) in molded product | °C | 0.70 | 0.70 | 0.50 | 0.70 | 0.50 | 0.20 | 0.30 | 1.10 | 4.40 | 0.40 | 0.30 | - |
| | Tm(A) - Tm(A,M) Melting point Tm (B,M) of polyamide molded | °C | 196.6 | 196.3 | 196.7 | 196.9 | 197.1 | 196.7 | 181.7 | 196.1 | peak | 218.4 | - | 199.0 |
| | (B) in product | °C | 2.4 | 2.7 | 2.3 | 2.1 | 1.9 | 2.3 | 2.6 | 2.9 | - | 6.6 | | 0 |
| | Tm(B) - Tm(B,M) Melting heat quantity of polyamide (A) in molded product | J/g | -32.4 | -32.8 | -33.1 | -32.7 | -34.9 | -29.8 | -32.4 | -33.1 | -35.4 | -27 | -53 | - |
| | Melting heat quantity of polyamide (B) | J/g | -8.6 | -8.1 | -8.9 | -8.3 | -7.4 | -10.3 | -8.7 | -6.7 | No peak | -10 | | -41 |
| Tensile mechanical properties | in molded product Tensile at break | MPa | 52 | 53 | 51 | 52 | 50 | 52 | 50 | 33 | 26 | 40 | 82 | 44 |
| | strength break | % | 310 | 307 | 321 | 324 | 4.0 | 315 | 324 | 277 | 203 | 312 | 3 | 189 |
| | Tensile elongation at | GPa | 2.0 | 2.1 | 2.1 | 2.1 | 2.4 | 1.8 | 1.9 | 1.5 | 0.7 | 2.1 | 3.6 | 0.5 |
| (at 23°C and 50% RH) Gas barrier properties | Tensile modulus of elasticity OTR | *1 | 0.21 | 0.21 | 0.21 | 0.20 | 0.17 | 0.28 | 0.26 | 0.28 | 0.50 | 0.25 | 0.09 | 0.96 |
| (at 23°C and 60% RH) | | % | 1.7 | 1.5 | 1.5 | 1.4 | 1.4 | 1.7 | 1.5 | 0.7 | 0.8 | 1.8 | 1.6 | 1.0 |
| Appearance (at 23°C and 50% RH) *1: cc-mm (m²·day·atm) Dry: Dry-blend Melt-lm: Melt-mixing | HAZE YI | - | 0.7 | 0.8 | 0.6 | 0.6 | 0.7 | 0.9 | 0.6 | 1.1 | 1.4 | 2.8 | 0.9 | 0.7 |

EP 3 398 995 B1

In Comparative Example 7 in which only the metaxylylene group-containing polyamide (A1) was used, the elongation of the film is inferior. In Comparative Example 8 in which only the aliphatic polyamide (B1) was used, the tensile elasticity and gas barrier properties are inferior. In Comparative Examples 4 and 5 in which the pellets obtained by previously melt-mixing the metaxylylene group-containing polyamide (A1) and the aliphatic polyamide (B1) were further melted and molded, the tensile mechanical physical properties and gas barrier properties were insufficient. In Comparative Example 3 in which the aliphatic polyamide (B2) whose ε-aminocaproic acid unit/hexamethylene adipamide unit ratio falls outside the scope of the present invention, the gas barrier properties were insufficient. In addition, in Comparative Example 6 in which the aliphatic polyamide (B3) in which the aliphatic polyamide was constituted of only an ε-aminocaproic acid unit, not only the gas barrier properties were insufficient, but also the crystallization rate was too fast, so that the moldability was inferior. In addition, in Comparative Example 1 in which the mass ratio (A1)/(B1) of the metaxylylene group-containing polyamide (A1) to the aliphatic polyamide (B1) was 70/30, the elongation of the film was insufficient, and in Comparative Example 2 in which the (A1)/(B1) ratio was 50/50, the gas barrier properties were insufficient.

In contrast, Examples 1 to 4 in which the dry-blend mixture of the present invention was used are excellent in the gas barrier properties, transparency, and toughness.

(Multilayer Film)

Example 5

Using a multilayer film molding apparatus composed of a first extruder having a diameter of 32 mm, second to fourth extruders each having a dimeter of 40 mm, a feed block, a T-die, a chill roll, and a film winder, dry-blend pellets in which a mass ratio (A1)/(B1) of the metaxylylene group-containing polyamide (A1) to the aliphatic polyamide (B1) was 60/40 were extruded as a gas barrier layer from the first extruder at an extrusion temperature of 255°C; maleic anhydride-modified polypropylene "MODIC P604V" (manufactured by Mitsubishi Chemical Corporation) was extruded as an adhesive layer (AD) from the second extruder at an extrusion temperature of 210°C; homopolypropylene "NOVATEC PP FY6" (manufactured by Japan Polypropylene Corporation) was extruded as a polypropylene layer (PP) from the third and fourth extruders at an extrusion temperature of 240°C; and the temperatures of the feed block and the T-die were set to 255°C, thereby obtaining a three-kind five-layer multilayer film having a total thickness of 200 μm and composed of PP/AD/gas barrier layer/AD/PP. At that time, a residence time was about 5 minutes. A thickness distribution of the respective layers of the multilayer film was PP/AD/gas barrier layer/AD/PP = 80/10/20/10/80 (μm).

As for the total thickness and the ratio of the respective layers of the multilayer film, the multilayer film was cut with a cutter, and its cross section was measured with an optical microscope.

As for the produced film, the morphology observation and the measurement of tensile mechanical properties, OTR, HAZE, and YI were carried out. The results are shown in Table 2. The results of the morphology observation of the gas barrier layer revealed that a microphase-separated structure was formed; the aforementioned microphase-separated structure was a cylindrical structure composed of the aliphatic polyamide (B1); the average diameter of the cylindrical domain was 140 nm; the length in MD of the cylindrical domain was longer than the length in TD; and the average length in MD of the cylindrical domain was 850 nm.

Example 6

A multilayer film was produced in the same manner as in Example 5, except that at the time of multilayer film production, a layer obtained by adding 300 mass ppm of the lubricant (L1) and 100 mass ppm of the nonionic surfactant to 100 parts by mass of the dry-blend pellets in which a mass ratio (A1)/(B1) of the metaxylylene group-containing polyamide (A1) to the aliphatic polyamide (B1) was 60/40 was used as the gas barrier layer, and the various evaluations were carried out. The results are shown in Table 2. The results of the morphology observation revealed that a microphase-separated structure was formed; the aforementioned microphase-separated structure was a cylindrical structure composed of the aliphatic polyamide (B1); the average diameter of the cylindrical domain was 150 nm; the length in MD of the cylindrical domain was longer than the length in TD; and the average length in MD of the cylindrical domain was 800 nm.

Example 7

A multilayer film was produced in the same manner as in Example 5, except for changing the use amount of the lubricant (L1) to 2,000 mass ppm and changing the use amount of the nonionic surfactant to 100 mass ppm based on 100 parts by mass of the dry-blend pellets, and the various evaluations were carried out. The results are shown in Table 2. The results of the morphology observation revealed that a microphase-separated structure was formed; the aforementioned microphase-separated structure was a cylindrical structure composed of the aliphatic polyamide (B1);

the average diameter of the cylindrical domain was 120 nm; the length in MD of the cylindrical domain was longer than the length in TD; and the average length in MD of the cylindrical domain was 720 nm.

Example 8

A multilayer film was produced in the same manner as in Example 7, except for using the lubricant (L2) in place of the lubricant (L1), and the various evaluations were carried out. The results are shown in Table 2. The results of the morphology observation revealed that a microphase-separated structure was formed; the aforementioned microphase-separated structure was a cylindrical structure composed of the aliphatic polyamide (B1); the average diameter of the cylindrical domain was 130 nm; the length in MD of the cylindrical domain was longer than the length in TD; and the average length in MD of the cylindrical domain was 770 nm.

Example 9

A multilayer film was produced in the same manner as in Example 5, except that at the time of multilayer film production, a layer obtained by adding 1,000 mass ppm of the compatibilization inhibitor (S1) to 100 parts by mass of the dry-blend pellets in which a mass ratio (A1)/(B1) of the metaxylylene group-containing polyamide (A1) to the aliphatic polyamide (B1) was 60/40 was used as the gas barrier layer, and the various evaluations were carried out. The results are shown in Table 2. The results of the morphology observation revealed that a microphase-separated structure was formed; the aforementioned microphase-separated structure was a cylindrical structure composed of the aliphatic polyamide (B1); the average diameter of the cylindrical domain was 130 nm; the length in MD of the cylindrical domain was longer than the length in TD; and the average length in MD of the cylindrical domain was 780 nm.

Example 10

A multilayer film was produced in the same manner as in Example 6, except that at the time of multilayer film production, a layer obtained by adding 500 mass ppm of the compatibilization inhibitor (S2) to 100 parts by mass of the dry-blend pellets in which a mass ratio (A1)/(B1) of the metaxylylene group-containing polyamide (A1) to the aliphatic polyamide (B1) was 60/40 was used as the gas barrier layer, and the various evaluations were carried out. The results are shown in Table 2. The results of the morphology observation revealed that a microphase-separated structure was formed; the aforementioned microphase-separated structure was a cylindrical structure composed of the aliphatic polyamide (B1); the average diameter of the cylindrical domain was 130 nm; the length in MD of the cylindrical domain was longer than the length in TD; and the average length in MD of the cylindrical domain was 790 nm.

Example 11

A multilayer film was produced in the same manner as in Example 10, except for changing the use amount of the compatibilization inhibitor (S2) to 1,000 mass ppm based on 100 parts by mass of the dry-blend pellets, and the various evaluations were carried out. The results are shown in Table 2. The results of the morphology observation revealed that a microphase-separated structure was formed; the aforementioned microphase-separated structure was a cylindrical structure composed of the aliphatic polyamide (B1); the average diameter of the cylindrical domain was 130 nm; the length in MD of the cylindrical domain was longer than the length in TD; and the average length in MD of the cylindrical domain was 780 nm.

Example 12

A multilayer film was produced in the same manner as in Example 10, except for changing the use amount of the compatibilization inhibitor (S2) to 2,000 mass ppm based on 100 parts by mass of the dry-blend pellets, and the various evaluations were carried out. The results are shown in Table 2. The results of the morphology observation revealed that a microphase-separated structure was formed; the aforementioned microphase-separated structure was a cylindrical structure composed of the aliphatic polyamide (B1); the average diameter of the cylindrical domain was 120 nm; the length in MD of the cylindrical domain was longer than the length in TD; and the average length in MD of the cylindrical domain was 770 nm.

Comparative Example 9

A multilayer film was produced in the same manner as in Example 5, except that at the time of multilayer film production, the melt-mixed pellets used in Comparative Example 4, in which a mass ratio (A1)/(B1) of the metaxylylene group-containing polyamide (A1) to the aliphatic polyamide (B1) was 60/40, were used as the gas barrier layer, and the various evaluations were carried out. The results are shown in Table 2.

The resin pressure of the first extruder in which the melt-mixed pellets of the metaxylylene group-containing polyamide (A1) and the aliphatic polyamide (B1) were charged was not stable, and only a partially stable film was obtained. In addition, the results of the morphology observation revealed that the metaxylylene group-containing polyamide (A1) and the aliphatic polyamide (B1) were compatibilized with each other.

Comparative Example 10

A multilayer film was produced in the same manner as in Example 5, except that at the time of multilayer film production, the melt-mixed pellets used in Comparative Example 5, in which a mass ratio (A1)/(B1) of the metaxylylene group-containing polyamide (A1) to the aliphatic polyamide (B1) was 60/40, were used as the gas barrier layer, and the various evaluations were carried out. The results are shown in Table 2.

The resin pressure of the first extruder in which the melt-mixed pellets of the metaxylylene group-containing polyamide (A1) and the aliphatic polyamide (B1) were charged was not stable, and only a partially stable film was obtained. In addition, the results of the morphology observation revealed that the metaxylylene group-containing polyamide (A1) and the aliphatic polyamide (B1) were compatibilized with each other.

Comparative Example 11

A multilayer film was produced in the same manner as in Example 5, except that at the time of multilayer film production, only the metaxylylene group-containing polyamide (A1) was used as the gas barrier layer, and the various evaluations were carried out. The results are shown in Table 2.

Comparative Example 12

A multilayer film was produced in the same manner as in Example 5, except that at the time of multilayer film production, only the aliphatic polyamide (B1) was used as the gas barrier layer, and the various evaluations were carried out. The results are shown in Table 2.

Comparative Example 13

A multilayer film was produced in the same manner as in Example 5, except that at the time of multilayer film production, only EVOH "EVAL J102B" (manufactured by Kuraray Co., Ltd., ethylene content: 32 mol%) was used as the gas barrier layer, and the various evaluations were carried out. The results are shown in Table 2.

Table 2

| | | | Example | | | | | | | | Comparative Example | | | | |
|---|---|---|---|---|---|---|---|---|---|---|---|---|---|---|---|
| | | | 5 | 6 | 7 | 8 | 9 | 10 | 11 | 12 | 9 | 10 | 11 | 12 | 13 |
| Polyamide resin | Polyamide (A) | | A1 | A1 | A1 | A1 | A1 | A1 | A1 | A1 | A1 | A1 | A1 | - | EVOH |
| | Polyamide (B) | | B1 | B1 | B1 | B1 | B1 | B1 | B1 | B1 | B1 | B1 | - | B1 | |
| Lubricant | | | - | L1 | L1 | L2 | - | L1 | L1 | L1 | - | - | - | - | |
| Compatibilization inhibitor | | | - | - | - | - | S1 | S2 | S2 | S2 | | | | | |
| Mixing ratio | Polyamide (A) | wt% | 60 | 60 | 60 | 60 | 60 | 60 | 60 | 60 | 60 | 60 | 100 | 0 | |
| | Polyamide (B) | wt% | 40 | 40 | 40 | 40 | 40 | 40 | 40 | 40 | 40 | 40 | 0 | 100 | |
| | Lubricant | ppm | 0 | 300 | 2000 | 2000 | 0 | 300 | 300 | 300 | 0 | 0 | 0 | 0 | 0 |
| | Alkali metal salt | ppm | 0 | 0 | 0 | 0 | 1000 | 500 | 1000 | 2000 | 0 | 0 | 0 | 0 | 0 |
| Mixing method | | - | Dry | Dry | Dry | Dry | Dry | Dry | Dry | Dry | Melt-lm | Melt-lm | - | - | - |
| SEM observation | Morphology | | Cylindrical structure | Cylindrical structure | Cylindrical structure | Cylindrical structure | Cylindrical structure | Cylindrical structure | Cylindrical structure | Cylindrical structure | Compatibilized | Compatibilized | - | - | - |
| | Diameter of cylindrical domain | nm | 140 | 150 | 120 | 130 | 130 | 130 | 130 | 120 | - | - | - | - | - |
| | Average length in MD of cylindrical domain | nm | 850 | 800 | 720 | 770 | 780 | 790 | 780 | 770 | - | - | - | - | - |
| Tensile mechanical properties (at 23°C and 50% RH) | Tensile strength at break | MPa | 31 | 31 | 31 | 31 | 31 | 31 | 31 | 31 | 32 | 32 | 32 | 32 | 31 |
| | Tensile elongation at break | % | 681 | 693 | 695 | 684 | 690 | 695 | 693 | 692 | 682 | 663 | 424 | 812 | 508 |
| | Tensile modulus of elasticity | GPa | 1.2 | 1.2 | 1.2 | 1.2 | 1.2 | 1.2 | 1.2 | 1.2 | 0.9 | 1.0 | 1.2 | 1.1 | 1.2 |

(continued)

| | | | | Example | | | | | | | | Comparative Example | | | | |
|---|---|---|---|---|---|---|---|---|---|---|---|---|---|---|---|---|
| | | | | 5 | 6 | 7 | 8 | 9 | 10 | 11 | 12 | 9 | 10 | 11 | 12 | 13 |
| Gas barrier properties | OTR (at 23°C and 60% RH) | | *2 | 12.4 | 12.1 | 12.1 | 12.1 | 12.0 | 11.9 | 11.8 | 11.8 | 24.1 | 29.9 | 4.1 | 112.0 | 0.5 |
| | Cumulative oxygen transmission amount (at 23°C and 60% RH) After retort *4 | 30 days | *3 | 453 | 450 | 445 | 447 | 430 | 432 | 425 | 420 | 992 | 1146 | 117 | 2440 | 1506 |
| | | 180 days | | 1601 | 1595 | 1590 | 1585 | 1540 | 1530 | 1520 | 1510 | 3381 | 4173 | 560 | 10390 | 1650 |
| | Cumulative oxygen transmission amount (at 23°C and 80% RH) After retort *4 | 30 days | | 1106 | No Data | No Data | No Data | No Data | No Data | No Data | No Data | 2020 | 2492 | 163 | 3250 | 2651 |
| | | 180 days | | 4350 | No Data | No Data | No Data | No Data | No Data | No Data | No Data | 8385 | 10420 | 807 | 12430 | 4466 |
| Appearance (at 23°C and 50% RH) | Haze | | % | 31.0 | 32.0 | 33.0 | 33.0 | 32.0 | 33.0 | 33.4 | 34.1 | 32.0 | 29.0 | 31.0 | 33.0 | 33.0 |
| | YI | | - | 0.3 | 0.3 | 0.4 | 0.4 | 0.4 | 0.4 | 0.4 | 0.4 | 0.5 | 0.5 | 0.3 | 0.2 | 0.1 |

Film configuration: Polypropylene layer/adhesive layer/gas barrier layer/adhesive layer/polypropylene layer = 80/10/20/10/80 ($\mu$m)

*2: cc/(m$^2$·day·atm)

*3: cc/(m$^2$·atm)

*4: Retort treatment conditions: 121°C for 30 minutes

EP 3 398 995 B1

In Comparative Example 11 in which only the metaxylylene group-containing polyamide (A1) was used as the gas barrier layer, the elongation of the film is inferior. In Comparative Example 12 in which only the aliphatic polyamide (B1) was used as the gas barrier layer, the gas barrier properties are inferior. In Comparative Example 13 in which only EVOH was used, the elongation of the film is inferior. In Comparative Examples 9 and 10 in which the pellets obtained by melt-mixing the metaxylylene group-containing polyamide (A1) and the aliphatic polyamide (B1) were used, the gas barrier properties were insufficient.

In contrast, Examples 5 to 12 in which the dry-blend mixture of the present invention was used were excellent in the gas barrier properties, transparency, and toughness.

Example 13

Using a multilayer film molding apparatus composed of a first extruder having a diameter of 32 mm, second to fourth extruders each having a dimeter of 40 mm, a feed block, a T-die, a chill roll, and a film winder, dry-blend pellets in which a mass ratio (A1)/(B1) of the metaxylylene group-containing polyamide (A1) to the aliphatic polyamide (B1) was 60/40 were extruded as a gas barrier layer from the first extruder at an extrusion temperature of 260°C; "MODIC M545" (manufactured by Mitsubishi Chemical Corporation) was extruded as an adhesive layer (AD) from the second extruder at an extrusion temperature of 230°C; "NOVATEC LL UF240" (manufactured by Japan Polyethylene Corporation) was extruded as linear low density polyethylene (LLDPE) from the third and fourth extruders at an extrusion temperature of 230°C; and the temperatures of the feed block and the T-die were set to 255°C, thereby obtaining a three-kind five-layer unstretched multilayer film having a total thickness of 150 μm and composed of gas barrier layer/AD/gas barrier layer/AD/LLDPE layer. At that time, a residence time was about 4 minutes.

The obtained unstretched laminated film was held at a preheating blowing temperature of 140°C for 30 seconds by using a clip-type simultaneous biaxial stretching machine and then stretched two times in the machine direction and two times in the transverse direction, and this film was subjected to a heat fixing treatment at 105°C for 30 seconds within a tenter oven while holding the ends of the film by a tenter clip. A thickness distribution of the respective layers of the multilayer film after stretching was gas barrier layer/AD/gas barrier layer/AD/LLDPE layer = 6/5/6/5/15 (μm).

The obtained multilayer stretched film was excellent in a balance between the gas barrier properties and the flexibility. Furthermore, in the multilayer stretched film, the degree of shrinkage at storage or after boiling was suppressed low, whereas on heat shrinkage by the heat treatment, the sufficient shrinking properties were exhibited.

Table 3

| | | | Example 13 | |
|---|---|---|---|---|
| Film configuration | Composition | | Blend/tie/Blend/tie/ LLDPE | |
| | Thickness | μm | 6/5/6/5/15 | |
| Extrusion conditions | Extrusion temp. | °C | 260 | |
| | Chill roll temp. | °C | 30 | |
| | Thickness | μm | 150 | |
| Stretching conditions | Preheat temp. | °C | 100 to 140 | |
| | Preheat time | sec | 30 | |
| | Draw ratio | MD × TD | 2 x 2 | |
| Maximum stretching stress | | N | 5.4 | |
| | | | MD | TD |
| Tensile mechanical properties (at 23°C and 50% RH) | Tensile strength at break | MPa | 52 | 54 |
| | Tensile elongation at break | % | 140 | 110 |
| | Tensile modulus of elasticity | MPa | 858 | 916 |
| Impact strength | 23°C50%RH | kg·cm/15 μm | 22.5 | |

(continued)

| | | | MD | TD |
|---|---|---|---|---|
| Degree of shrinkage at storage | 40°C50%RH, 3 hours | % | 0.8 | |
| | 40°C50%RH, 48 hours | % | 1.0 | |
| Degree of shrinkage after boiling | Boiling at 90°C for 30 minutes | % | 9.6 | |
| Maximum degree of shrinkage | 120°C, 30 sec | % | 19.6 | |
| HAZE | Untreated | % | 8.7 | |
| | Boiling at 90°C for 30 minutes | % | 26.7 | |
| YI | Untreated | - | 1.6 | |
| | Boiling at 90°C for 30 minutes | - | 2.5 | |
| OTR | 23°C60%RH | cc/m$^2$·day·atm | 16.9 | |

INDUSTRIAL APPLICABILITY

By using and molding the dry-blend mixture of the present invention, a polyamide film which is excellent in the gas barrier properties, transparency, and toughness can be provided.

**Claims**

1. A dry-blend mixture, comprising:

(A) a metaxylylene group-containing polyamide comprising a diamine unit including 80 mol% or more of a metaxylylenediamine unit based on the diamine unit and a dicarboxylic acid unit including 80 mol% or more of at least one unit selected from the group consisting of an α,ω-linear aliphatic dicarboxylic acid unit having 6 to 12 carbon atoms and an isophthalic acid unit based on the dicarboxylic acid unit, in which a molar ratio of the α,ω-linear aliphatic dicarboxylic acid unit and the isophthalic acid unit ((α,ω-linear aliphatic dicarboxylic acid unit)/(isophthalic acid unit)) is 80/20 to 100/0; and
(B) an aliphatic polyamide comprising 75 to 95 mol% of an ε-aminocaproic acid unit and 25 to 5 mol% of a hexamethylene adipamide unit based on the total constitutional units of the aliphatic polyamide,

wherein a mass ratio ((A)/(B)) of the metaxylylene group-containing polyamide (A) and the aliphatic polyamide (B) is in a range of from 55/45 to 65/35.

2. The dry-blend mixture according to claim 1, wherein a melting point peak (Tm(A,M)) of the metaxylylene group-containing polyamide (A) measured by differential scanning calorimetry for a molded product of the dry-blend mixture and a melting point (Tm(A)) of the metaxylylene group-containing polyamide (A) measured by differential scanning calorimetry for the metaxylylene group-containing polyamide (A) before dry-blending satisfy the following relation (1), and a melting point peak (Tm(B,M)) of the aliphatic polyamide (B) measured by differential scanning calorimetry for a molded product of the dry-blend mixture and a melting point (Tm(B)) of the aliphatic polyamide (B) measured by differential scanning calorimetry for the aliphatic polyamide (B) before dry-blending satisfy the following relation (2):

$$\text{Tm(A) - 3} \leq \text{Tm(A,M)} \leq \text{Tm(A)} \qquad (1)$$

$$\text{Tm(B) - 3} \leq \text{Tm(B,M)} \leq \text{Tm(B)} \qquad (2),$$

wherein the melting point is measured using a differential scanning calorimeter in a nitrogen gas stream at a temperature rise rate of 10°C/min.

3. The dry-blend mixture according to claim 2, wherein the melting point peak (Tm(A,M)) of the metaxylylene group-containing polyamide (A) is within a range of from 225 to 237.5°C; and
the melting point peak (Tm(B,M)) of the aliphatic polyamide (B) is within a range of from 195 to 199°C,
wherein the melting point is measured using a differential scanning calorimeter in a nitrogen gas stream at a temperature rise rate of 10°C/min.

4. The dry-blend mixture according to any one of claims 1 to 3, wherein a difference between a relative viscosity of the metaxylylene group-containing polyamide (A) and a relative viscosity of the aliphatic polyamide (B) is within a range of from 0.6 to 1.6,
wherein the relative viscosity is measured according to the description using a Cannon-Fenske type viscometer.

5. The dry-blend mixture according to any one of claims 1 to 4, further comprising 300 to 4,000 mass ppm of a compatibilization inhibitor based on 100 parts by mass of the total amount of the metaxylylene group-containing polyamide (A) and the aliphatic polyamide (B).

6. The dry-blend mixture according to claim 5, wherein the compatibilization inhibitor is at least one selected from the group consisting of sodium acetate and calcium hydroxide.

7. The dry-blend mixture according to any one of claims 1 to 6, further comprising 100 to 4,000 mass ppm of ethylene bis(stearamide) or calcium stearate and 30 to 800 mass ppm of a nonionic surfactant,
wherein the ethylene bis(stearamide) or calcium stearate is spread on the dry-blend mixture through the nonionic surfactant.

8. A method for producing a dry-blend mixture, comprising a step of dry-blending:

pellets of (A) a metaxylylene group-containing polyamide containing a diamine unit including 80 mol% or more of a metaxylylenediamine unit based on the diamine unit and a dicarboxylic acid unit including 80 mol% or more of at least one unit selected from the group consisting of an $\alpha,\omega$-linear aliphatic dicarboxylic acid unit having 6 to 12 carbon atoms and an isophthalic acid unit based on the dicarboxylic acid unit, in which a molar ratio of the $\alpha,\omega$-linear aliphatic dicarboxylic acid unit and the isophthalic acid unit (($\alpha,\omega$-linear aliphatic dicarboxylic acid unit)/(isophthalic acid unit)) is 80/20 to 100/0; and
pellets of (B) an aliphatic polyamide containing 75 to 95 mol% of an $\varepsilon$-aminocaproic acid unit and 25 to 5 mol% of a hexamethylene adipamide unit based on the total constitutional units of the aliphatic polyamide,
wherein a mass ratio ((A)/(B)) of the metaxylylene group-containing polyamide (A) and the aliphatic polyamide (B) is in a range of from 55/45 to 65/35.

9. The method for producing a dry-blend mixture according to claim 8, wherein in the step of dry-blending, 300 to 4,000 mass ppm of a compatibilization inhibitor based on 100 parts by mass of the total amount of the metaxylylene group-containing polyamide (A) and the aliphatic polyamide (B) is added.

10. The method for producing a dry-blend mixture according to claim 8 or 9, comprising, after the step of dry-blending, a step of adding 30 to 800 mass ppm of a nonionic surfactant based on 100 parts by mass of the total amount of the metaxylylene group-containing polyamide (A) and the aliphatic polyamide (B) and subsequently adding 100 to 4,000 mass ppm of ethylene bis(stearamide) or calcium stearate based on 100 parts by mass of the total amount of the metaxylylene group-containing polyamide (A) and the aliphatic polyamide (B).

11. A molded product of a dry-blend mixture obtained by melt-mixing the dry-blend mixture according to any one of claims 1 to 7, wherein a microphase-separated structure is existent in the molded product.

12. The molded product of a dry-blend mixture according to claim 11, wherein the microphase-separated structure is a cylindrical structure,
a cylindrical domain of the cylindrical structure is the aliphatic polyamide (B),
a diameter of the cylindrical domain is 100 to 200 nm,
a length in MD of the cylindrical domain is longer than a length in TD of the cylindrical domain, and
an average length in MD of the cylindrical domain is 200 nm to 3 $\mu$m,
wherein the diameter of the cylindrical domain, the length in MD and the length in TD of the cylindrical domain are measured by using the Measurement of Domain Size by Morphology Observation according to the description.

13. A film or sheet comprising a layer formed of the dry-blend mixture according to any one of claims 1 to 7.

**Patentansprüche**

1. Ein trockengemischtes Gemisch, umfassend:

   (A) ein Metaxylylengruppe enthaltendes Polyamid, umfassend eine Diamineinheit, enthaltend 80 Mol-% oder mehr einer Metaxylylendiamineinheit, bezogen auf die Diamineinheit, und eine Dicarbonsäureeinheit, enthaltend 80 Mol-% oder mehr mindestens einer Einheit, ausgewählt aus der Gruppe bestehend aus einer $\alpha,\omega$-linearen aliphatischen Dicarbonsäureeinheit mit 6 bis 12 Kohlenstoffatomen und einer Isophthalsäureeinheit, bezogen auf die Dicarbonsäureeinheit, in der ein Molverhältnis der $\alpha,\omega$-linearen aliphatischen Dicarbonsäureeinheit und der Isophthalsäureeinheit (($\alpha,\omega$-lineare aliphatische Dicarbonsäureeinheit)/(Isophthalsäureinheit)) 80/20 bis 100/0 beträgt; und
   (B) ein aliphatisches Polyamid, umfassend 75 bis 95 Mol-% einer $\varepsilon$-Aminocapronsäureeinheit und 25 bis 5 Mol-% einer Hexamethylenadipamideinheit, bezogen auf die gesamten konstituierenden Einheiten des aliphatischen Polyamids,

   wobei ein Massenverhältnis ((A)/(B)) des Metaxylylengruppe enthaltenden Polyamids (A) und des aliphatischen Polyamids (B) in einem Bereich von 55/45 bis 65/35 liegt.

2. Das trockengemischte Gemisch nach Anspruch 1, wobei ein Schmelzpunktpeak (Tm(A,M)) des Metaxylylengruppe enthaltenden Polyamids (A), gemessen durch Differential-Scanning-Kalorimetrie, für einen Formkörper aus dem trockengemischten Gemisch und ein Schmelzpunkt (Tm(A)) des Metaxylylengruppe enthaltenden Polyamids (A), gemessen durch Differential-Scanning-Kalorimetrie, für das Metaxylylengruppe enthaltende Polyamid (A), vor dem Trockenmischen die nachstehende Beziehung (1) erfüllt, und ein Schmelzpunktpeak (Tm((B,M)) des aliphatischen Polyamids (B), gemessen durch Differential-Scanning-Kalorimetrie, für einen Formkörper aus dem trockengemischten Gemisch und ein Schmelzpunkt (Tm(B)) des aliphatischen Polyamids (B), gemessen durch Differential-Scanning-Kalorimetrie, für das aliphatische Polyamid (B), vor dem Trockenmischen die nachstehende Beziehung (2) erfüllt:

$$\mathrm{Tm(A) - 3} \leq \mathrm{Tm(A,M)} \leq \mathrm{Tm(A)} \qquad (1)$$

$$\mathrm{Tm(B) - 3} \leq \mathrm{Tm(B,M)} \leq \mathrm{Tm(B)} \qquad (2),$$

   wobei der Schmelzpunkt unter Verwendung eines Differential-Scanning-Kalorimeters in einem Stickstoffgasstrom bei einer Temperaturanstiegsrate von 10°C/min gemessen wird.

3. Das trockengemischte Gemisch nach Anspruch 2, wobei der Schmelzpunktpeak (Tm(A,M)) des Metaxylylengruppe enthaltenden Polyamids (A) innerhalb eines Bereichs von 225 bis 237,5°C liegt; und der Schmelzpunktpeak (Tm(B,M)) des aliphatischen Polyamids (B) innerhalb eines Bereichs von 195 bis 199°C liegt, wobei der Schmelzpunkt unter Verwendung eines Differential-Scanning-Kalorimeters in einem Stickstoffgasstrom bei einer Temperaturanstiegsrate von 10°C/min. gemessen wird.

4. Das trockengemischte Gemisch nach einem der Ansprüche 1 bis 3, wobei eine Differenz zwischen einer relativen Viskosität des Metaxylylengruppe enthaltenden Polyamids (A) und einer relativen Viskosität des aliphatischen Polyamids (B) innerhalb eines Bereichs von 0,6 bis 1,6 liegt, wobei die relative Viskosität gemäß der Beschreibung unter Verwendung eines Viskosimeters vom Cannon-Fenske-Typ gemessen wird.

5. Das trockengemischte Gemisch nach einem der Ansprüche 1 bis 4, ferner umfassend 300 bis 4.000 Massen-ppm eines Kompatibilisierungshemmers, bezogen auf 100 Massenteile der Gesamtmenge des Metaxylylengruppe enthaltenden Polyamids (A) und des aliphatischen Polyamids (B).

6. Das trockengemischte Gemisch nach Anspruch 5, wobei der Kompatibilisierungshemmer mindestens einer ist, ausgewählt aus der Gruppe bestehend aus Natriumacetat und Calciumhydroxid.

7. Das trockengemischte Gemisch nach einem der Ansprüche 1 bis 6, ferner umfassend 100 bis 4.000 Massen-ppm von Ethylen-bis(stearamid) oder Calciumstearat und 30 bis 800 Massen-ppm eines nichtionischen grenzflächenaktiven Mittels, wobei das Ethylen-bis(stearamid) oder Calciumstearat auf das trockengemischte Gemisch mithilfe eines nichtionischen grenzflächenaktiven Mittels verteilt wird.

8. Ein Verfahren zur Herstellung eines trockengemischten Gemischs, umfassend einen Schritt des Trockenmischens von:

Pellets eines (A) Metaxylylengruppe enthaltenden Polyamids, enthaltend eine Diamineinheit, enthaltend 80 Mol-% oder mehr einer Metaxylylendiamineinheit, bezogen auf die Diamineinheit, und eine Dicarbonsäureeinheit, enthaltend 80 Mol-% oder mehr mindestens einer Einheit, ausgewählt aus der Gruppe bestehend aus einer $\alpha,\omega$-linearen aliphatischen Dicarbonsäureeinheit mit 6 bis 12 Kohlenstoffatomen und einer Isophthalsäureeinheit, bezogen auf die Dicarbonsäureeinheit, in der ein Molverhältnis der $\alpha,\omega$-linearen aliphatischen Dicarbonsäureeinheit und der Isophthalsäureeinheit (($\alpha,\omega$-lineare aliphatische Dicarbonsäureeinheit)/(Isophthalsäureeinheit)) 80/20 bis 100/0 beträgt; und
Pellets eines (B) aliphatischen Polyamids, enthaltend 75 bis 95 Mol-% einer $\varepsilon$-Aminocapronsäureeinheit und 25 bis 5 Mol-% einer Hexamethylenadipamideinheit, bezogen auf die Gesamtheit der konstituierenden Einheiten des aliphatischen Polyamids, wobei ein Massenverhältnis ((A)/(B)) des Metaxylylengruppe enthaltenden Polyamids (A) und des aliphatischen Polyamids (B) in einem Bereich von 55/45 bis 65/35 liegt.

9. Das Verfahren zur Herstellung eines trockengemischten Gemischs nach Anspruch 8, wobei in dem Schritt des Trockenmischens 300 bis 4.000 Massen-ppm eines Kompatibilisationshemmers, bezogen auf 100 Massenteile der Gesamtmenge des Metaxylylengruppe enthaltenden Polyamids (A) und des aliphatischen Polyamids (B), zugegeben wird.

10. Das Verfahren zur Herstellung eines trockengemischten Gemischs nach Anspruch 8 oder 9, umfassend, nach dem Schritt des Trockenmischens, einen Schritt des Zugebens von 30 bis 800 Massen-ppm eines nichtionischen grenzflächenaktiven Mittels, bezogen auf 100 Massenteile der Gesamtmenge des Metaxylylengruppe enthaltenden Polyamids (A) und des aliphatischen Polyamids (B), und des anschließenden Zugebens von 100 bis 4.000 Massen-ppm von Ethylen-bis(stearamid) oder Calciumstearat, bezogen auf 100 Massenteile der Gesamtmenge des Metaxylylengruppe enthaltenden Polyamids (A) und des aliphatischen Polyamids (B).

11. Ein Formkörper aus einem trockengemischten Gemisch, erhalten durch Schmelzmischen des trockengemischten Gemischs nach einem der Ansprüche 1 bis 7, wobei eine mikrophasenseparierte Struktur in dem Formkörper existiert.

12. Der Formkörper aus einem trockengemischten Gemisch nach Anspruch 11, wobei die mikrophasenseparierte Struktur eine zylindrische Struktur ist,
eine zylindrische Domäne der zylindrischen Struktur das aliphatische Polyamid (B) ist,
ein Durchmesser der zylindrischen Domäne 100 bis 200 nm beträgt,
eine Länge in MD der zylindrischen Domäne länger als eine Länge in TD der zylindrischen Domäne ist, und
eine durchschnittliche Länge in MD der zylindrischen Domäne 200 nm bis 3 $\mu$m beträgt,
wobei der Durchmesser der zylindrischen Domäne, die Länge in MD und die Länge in TD der zylindrischen Domäne unter Verwendung der Messung der Domänengröße durch morphologische Beobachtung gemäß der Beschreibung gemessen werden.

13. Eine Folie oder ein Flächengebilde, umfassend eine Schicht, gebildet aus dem trockengemischten Gemisch nach einem der Ansprüche 1 bis 7.

**Revendications**

1. Mélange combiné à sec comprenant :

(A) un polyamide contenant un groupe métaxylylène comprenant un motif diamine comprenant 80 % en moles ou plus d'un motif métaxylylènediamine, basés sur le motif diamine, et un motif acide dicarboxylique comprenant 80 % en moles ou plus d'au moins un motif choisi dans l'ensemble constitué par un motif acide dicarboxylique aliphatique $\alpha,\omega$-linéaire ayant 6 à 12 atomes de carbone et un motif acide isophtalique, basés sur le motif acide dicarboxylique, dans lequel le rapport molaire du motif acide dicarboxylique aliphatique $\alpha,\omega$-linéaire au motif acide isophtalique ((motif acide dicarboxylique aliphatique $\alpha,\omega$-linéaire)/(motif acide isophtalique)) est de 80/20 à 100/0 ; et

(B) un polyamide aliphatique comprenant 75 à 95 % en moles d'un motif acide $\varepsilon$-aminocaproïque et 25 à 5 % en moles d'un motif adipamide hexaméthylène, basés sur le total des motifs constitutifs du polyamide aliphatique,

dans lequel le rapport en masse ((A)/(B)) du polyamide contenant un groupe métaxylylène (A) au polyamide aliphatique (B) est situé dans la plage allant de 55/45 à 65/35.

2. Mélange combiné à sec selon la revendication 1, dans lequel le pic de point de fusion (Tm(A,M)) du polyamide contenant un groupe métaxylylène (A), mesuré par calorimétrie à balayage différentiel, pour un produit moulé du mélange combiné à sec, et le pic de point de fusion (Tm(A)) du polyamide contenant un groupe métaxylylène (A), mesuré par calorimétrie à balayage différentiel, pour le polyamide contenant un groupe métaxylylène (A) avant combinaison à sec, satisfont à la relation (1) qui suit, et le pic de point de fusion (Tm(B,M)) du polyamide aliphatique (B), mesuré par calorimétrie à balayage différentiel, pour un produit moulé du mélange combiné à sec, et le pic de point de fusion (Tm(B)) du polyamide aliphatique (B), mesuré par calorimétrie à balayage différentiel, pour le polyamide aliphatique (B) avant combinaison à sec, satisfont à la relation (2) qui suit :

$$\mathrm{Tm(A)} - 3 \leq \mathrm{Tm(A,M)} \leq \mathrm{Tm(A)} \qquad (1)$$

$$\mathrm{Tm(B)} - 3 \leq \mathrm{Tm(B,M)} \leq \mathrm{Tm(B)} \qquad (2)$$

dans lequel le point de fusion est mesuré par utilisation d'un calorimètre à balayage différentiel dans un courant d'azote gazeux à une vitesse de montée en température de 10°C/min.

3. Mélange combiné à sec selon la revendication 2, dans lequel
le pic de point de fusion (Tm(A,M)) du polyamide contenant un groupe métaxylylène (A) est situé dans la plage allant de 225 à 237,5°C ; et
le pic de point de fusion (Tm(B,M)) du polyamide aliphatique (B) est situé dans la plage allant de 195 à 199°C, dans lequel le point de fusion est mesuré par utilisation d'un calorimètre à balayage différentiel dans un courant d'azote gazeux à une vitesse de montée en température de 10°C/min.

4. Mélange combiné à sec selon l'une quelconque des revendications 1 à 3, dans lequel la différence entre la viscosité relative du polyamide contenant un groupe métaxylylène (A) et la viscosité relative du polyamide aliphatique (B) est située dans la plage allant de 0,6 à 1,6,
dans lequel la viscosité relative est mesurée conformément à la description par utilisation d'un viscosimètre de type Cannon-Fenske.

5. Mélange combiné à sec selon l'une quelconque des revendications 1 à 4, comprenant en outre 300 à 4 000 ppm en masse d'un inhibiteur de compatibilisation, basées sur 100 parties en masse de la quantité totale du polyamide contenant un groupe métaxylylène (A) et du polyamide aliphatique (B).

6. Mélange combiné à sec selon la revendication 5, dans lequel l'inhibiteur de compatibilisation est au moins l'un choisi dans l'ensemble constitué par l'acétate de sodium et l'hydroxyde de calcium.

7. Mélange combiné à sec selon l'une quelconque des revendications 1 à 6, comprenant en outre 100 à 4 000 ppm en masse d'éthylènebis(stéaramide) ou de stéarate de calcium et 30 à 800 ppm en masse d'un tensioactif non-ionique,
dans lequel l'éthylènebis(stéaramide) ou le stéarate de calcium est étalé sur le mélange combiné à sec au moyen du tensioactif non-ionique.

8. Méthode pour produire un mélange combiné à sec, comprenant une étape de combinaison à sec de :

pastilles de (A) un polyamide contenant un groupe métaxylylène comprenant un motif diamine comprenant 80 % en moles ou plus d'un motif métaxylylènediamine, basés sur le motif diamine, et un motif acide dicarboxylique comprenant 80 % en moles ou plus d'au moins un motif choisi dans l'ensemble constitué par un motif acide dicarboxylique aliphatique $\alpha,\omega$-linéaire ayant 6 à 12 atomes de carbone et un motif acide isophtalique, basés sur le motif acide dicarboxylique, dans lequel le rapport molaire du motif acide dicarboxylique aliphatique $\alpha,\omega$-linéaire au motif acide isophtalique ((motif acide dicarboxylique aliphatique $\alpha,\omega$-linéaire)/(motif acide isophtalique)) est de 80/20 à 100/0 ; et

pastilles de (B) un polyamide aliphatique comprenant 75 à 95 % en moles d'un motif acide $\varepsilon$-aminocaproïque et 25 à 5 % en moles d'un motif adipamide hexaméthylène, basés sur le total des motifs constitutifs du polyamide aliphatique,

dans laquelle le rapport en masse ((A)/(B)) du polyamide contenant un groupe métaxylylène (A) au polyamide aliphatique (B) est situé dans la plage allant de 55/45 à 65/35.

9. Méthode pour produire un mélange combiné à sec selon la revendication 8, dans laquelle, dans l'étape de combinaison à sec, 300 à 4 000 ppm en masse d'un inhibiteur de compatibilisation, basées sur 100 parties en masse de la quantité totale du polyamide contenant un groupe métaxylylène (A) et du polyamide aliphatique (B), sont ajoutées.

10. Méthode pour produire un mélange combiné à sec selon la revendication 8 ou 9, comprenant, après l'étape de combinaison à sec, une étape d'addition de 30 à 800 ppm en masse d'un tensioactif non-ionique, basées sur 100 parties en masse de la quantité totale du polyamide contenant un groupe métaxylylène (A) et du polyamide aliphatique (B), et ensuite l'addition de 100 à 4 000 ppm en masse d'éthylènebis(stéaramide) ou de stéarate de calcium, basées sur 100 parties en masse de la quantité totale du polyamide contenant un groupe métaxylylène (A) et du polyamide aliphatique (B).

11. Produit moulé d'un mélange combiné à sec obtenu par mélange à l'état fondu du mélange combiné à sec de l'une quelconque des revendications 1 à 7, dans lequel une structure à microphases séparées existe dans le produit moulé.

12. Produit moulé d'un mélange combiné à sec selon la revendication 11, dans lequel la structure à microphases séparées est une structure cylindrique,

un domaine cylindrique de la structure cylindrique est le polyamide aliphatique (B), le diamètre du domaine cylindrique est de 100 à 200 nm,

la longueur dans le sens machine du domaine cylindrique est supérieure à la longueur dans le sens travers du domaine cylindrique, et

la longueur moyenne dans le sens machine du domaine cylindrique est de 200 nm à 3 $\mu$m,

dans lequel le diamètre du domaine cylindrique, la longueur dans le sens machine et la longueur dans le sens travers du domaine cylindrique sont mesurés par utilisation de la Mesure de Taille de Domaine par Observation de Morphologie conformément à la description.

13. Film ou feuille comprenant une couche formée du mélange combiné à sec de l'une quelconque des revendications 1 à 7.

FIG. 1

SU8020 30.0kV 8.1mm x50.0k TE      1.00um

FIG. 2

SU8020 30.0kV 7.9mm x50.0k TE      1.00um

**EP 3 398 995 B1**

## REFERENCES CITED IN THE DESCRIPTION

### Patent documents cited in the description

- JP 2011058144 A
- US 20140220274 A1